(19) Europäisches Patentamt / European Patent Office / Office européen des brevets

(11) **EP 2 654 236 B1**

(12) **EUROPEAN PATENT SPECIFICATION**

(45) Date of publication and mention
of the grant of the patent:
**21.05.2014 Bulletin 2014/21**

(51) Int Cl.:
*H04L 1/18* (2006.01)     *H04L 5/00* (2006.01)

(21) Application number: **12305458.7**

(22) Date of filing: **20.04.2012**

(54) **Method for asynchronous retransmission in a radio communication system, transmitting apparatus and receiving apparatus thereof**

Verfahren zur asynchronen Neuübertragung in einem Funkkommunikationssystem, Sendevorrichtung und Empfangsvorrichtung dafür

Procédé de retransmission asynchrone dans un système de communication radio, appareil de transmission et appareil de réception

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.10.2013 Bulletin 2013/43**

(73) Proprietor: **Alcatel Lucent**
**75007 Paris (FR)**

(72) Inventor: **Braun, Volker**
**70176 Stuttgart (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

(56) References cited:
**EP-A1- 2 104 261**    **EP-A1- 2 375 607**
**EP-A1- 2 416 518**    **WO-A1-2008/104099**
**WO-A1-2012/036479**    **WO-A2-2008/132599**

## Description

### FIELD OF THE INVENTION

The invention relates to wireless communications and, more particularly but not exclusively, to asynchronous retransmission in a radio communication system.

### BACKGROUND

HARQ (HARQ = hybrid automatic repeat request) with chase combining or incremental redundancy is widely used in modern packet based wireless communication systems such as UMTS systems (UMTS = Universal Mobile Telecommunication Systems) or LTE systems (LTE = Long Term Evolution). HARQ is used in these systems in conjunction with adaptive modulation and coding so as to compensate for transmission errors caused by imperfect link adaptation. Imperfect link adaptation causes significant throughput degradation as compared to the theoretical limits, despite of using HARQ.

With HARQ, typically a CRC check (CRC = Cyctic Redundancy Check) is performed upon reception of a first transmission of an encoded data packet and the result of the CRC check, PASS or FAIL, is reported to the transmitter as an ACK (ACK = acknowledgement) or a NACK (NACK = Negative Acknowledgement), respectively. In case of NACK, the transmitter performs a retransmission of the data packet and soft combining of the codewords of the received first transmission and the received retransmission is performed by the receiver before the decoding. Soft combining improves error rate performance as compared to simply discarding the first transmission attempt at the receiver,

With chase combining the retransmission uses the same codeword size and same RV parameters (RV = redundancy version), i.e. puncturing patterns, as the first transmission. The retransmission of the whole codeword size of the first transmission may consume more radio link capacity than required.

With incremental redundancy only a subset of the information bits or none of the information bits of the first transmission and only parity bits are retransmitted.

In LTE for example, eight HARQ processes can be applied simultaneously. Each HARQ process is identified by a retransmission process indicator, which is called HARQ process number in case of LTE (see 3GPP Technical Specification 36.212). In addition to the retransmission process indicator a further indicator is usually reported from the transmitter to the receiver such that the receiver is able to identify, whether data received for a specific retransmission process indicator are new data for a new initial transmission or the data to be received belong to a retransmission of a former initial transmission.

In WO 2008/104099 A1 a transmitter chooses based on at least one packet parameter a partial error protection to be applied to the at least one packet. The transmitter indicates the applied partial error protection to a receiver in a way agreed between the transmitter and the receiver. The bits to be included in the partial error protection calculations are implicitly provided to the receiver by a combination of usage of certain size of transmitted data blocks and usage of a certain HARQ process.

### SUMMARY

The way of signalling HARQ processes in a radio communication system effects an allocation of radio resources for control information and affects an overall throughput for user data in the radio communication system.

It is an object of the invention to reduce an allocation of radio resources for control information in the radio communication system and to increase the overall throughput for user data in the radio communication system.

The object is achieved by a method for asynchronous retransmission in a radio communication system, The method contains the steps of splitting at a transmitting apparatus a retransmission process indicator into at least a first part and at least a second part, transmitting the at least first part of the retransmission process indicator for an initial transmission or a retransmission of radio transmission data from the transmitting apparatus to a receiving apparatus, providing the at least second part of the retransmission process indicator from the transmitting apparatus to the receiving apparatus by a mapping to a radio resource parameter that is applied for the initial transmission or the retransmission, deducing at the receiving apparatus the provided at least second part of the retransmission process indicator based on the applied radio resource parameter and based on the mapping, and determining at the receiving apparatus the retransmission process indicator from the received at least first part and the deduced at least second part. The object is further achieved by a transmitting apparatus for asynchronous retransmission in a radio communication system and by a receiving apparatus for asynchronous retransmission in a radio communication system.

The method for indicating initial transmissions or retransmissions such as HARQ process numbers from a transmitting apparatus to a receiving apparatus is based on an explicit transmission and a further implicit provision of information, which is split at the transmitting apparatus into two parts and which are merged at the receiving apparatus to obtain the whole information. For the at least first part control information is explicitly transmitted from the transmitting apparatus to the receiving apparatus. The at least second part is based on information, which is not explicitly transmitted but which can be deduced from a radio resource parameter, which is applied for the HARQ process.

According to three alternatives, the radio resource parameter is a radio resource parameter for transmitting the initial transmission or the retransmission or is a radio resource parameter for transmitting the at least first part of the retransmission process indicator or is a radio resource parameter for transmitting an indication for a radio resource, which contains the at least first part of the retransmission process indicator. The radio resource parameter may be for example a time parameter, a frequency parameter or a coding parameter.

The method offers a first benefit of not requiring increasing a number of signalling bits for the retransmission process indicator, if a number of HARQ processes will be increased in an existing radio communication system. A higher number of HARQ processes may be required for example, if resource coverage of redundancy information of a single retransmission is decreased so that two or more retransmissions fit into a radio resource of a conventional retransmission and if a continuous scheduling to a single receiving apparatus shall be guaranteed.

According to a further use case, multi stream multiplexing may be applied by a MIMO transmission (MIMO = multiple input multiple output), if the transmitter apparatus applies two or more antenna elements for the transmission of radio transmission data such as user data or control data to the receiving apparatus. In such a case, a number of HARQ processes may increase linearly with a number of simultaneous data streams from the transmitting apparatus to the receiving apparatus and/or to further receiving apparatuses resulting in a large number of HARQ processes, which require an adequate identification at the receiving apparatus and/or the further receiving apparatuses. By applying the present invention, an increase of the amount of radio resources for signalling the additional HARQ processes can be avoided or at least can be reduced. By applying multi stream multiplexing an initial transmission may be performed on a first stream and a retransmission may be performed on a second stream; such retransmission can be enabled if a so-called HARQ process ID is signalled together with a stream ID that relates to pre-coding information, such as the "Transport block to codeword swap flag" in DCI Format 2 of LTE Rel8 (3GPP Technical Specification 36.212). Multiple (e.g. reduced-size) retransmissions can be performed on a same stream within a same TTI (TTI = transmission time interval), also when (part of) initial transmissions were performed on another stream or on multiple streams; such multiple retransmissions can be enabled in that for each retransmission the HARQ process ID is signalled together with a respective stream ID that relates to pre-coding information. Further redundancy information for a retransmission of data of previous initial transmissions via one, two or more than two streams may be multiplexed to a single data packet within a single TTI and this data packet is transmitted from the transmitting apparatus to the receiving apparatus. In case of CoMP transmission (CoMP = Cooperative Multi Point), the different streams can be transmitted from different cells or sites, e.g. via different base stations or via different remote radio heads; this can be enabled in that the HARQ process IDs are defined on a per user basis or on a per mobile station basis, irrespective of a base station site or cell ID etc.

The method offers a second benefit of reducing a number of signalling bits for the retransmission process indicator, if a number HARQ processes is kept constant in an existing radio communication system.

The method provides a third benefit of designing a new radio communication system with fewer signalling bits for transmitting the retransmission process indicators.

According to a preferred embodiment, the method contains the steps of predefining at the transmitting apparatus and at the receiving apparatus the mapping between a first state of the at least second part of the retransmission process indicator and a first range of the radio resource parameter and between at least a second state of the at least second part of the retransmission process indicator and at least a second range of the radio resource parameter, and the determining step may contain the sub-steps of deducing at the receiving apparatus the at least second part of the retransmission process indicator based on the mapping and based on the first range or the at least second range of the received radio resource parameter, and determining at the receiving apparatus the retransmission process indicator from the received at least first part of the retransmission process indicator and from the deduced at least second part of the retransmission process indicator.

According to a first alternative embodiment, the time parameter is a time period of at least two transmit time intervals, the at least two transmit time intervals are numbered serially, even numbered transmit time intervals of the at least two transmit time intervals are allocated to a first one of the at least two states and odd numbered transmit time intervals of the at least two transmit time intervals are allocated to a second one of the at least two states.

According to a second alternative embodiment, the frequency parameter is a frequency range of at least two transmit frequency sub-ranges, a first one of the at least two transmit frequency sub-ranges is allocated to a first one of the at least two states and a second one of the at least two transmit frequency sub-ranges is allocated to a second one of the at least two states.

According to a third alternative embodiment, the coding parameter is a group of at least two transmit codes, a first one of the at least two transmit codes is allocated to a first one of the at least two states and a second one of the at least two transmit codes is allocated to a second one of the at least two states. According to a fourth alternative embodiment, the radio resource parameter is a frequency location for transmitting the initial transmission or the retransmission or for transmitting the at least first part of the retransmission process indicator or is a radio resource parameter for indicating a radio resource, which contains the at least first part of the retransmission process indicator.

In a further improved embodiment, the method further contains the steps of transmitting at least a first part of at least one further retransmission process indicator for at least one further initial transmission or at least one further retransmission of radio transmission data from the transmitting apparatus to the receiving apparatus and determining at the receiving apparatus the at least one further initial transmission or the at least one further retransmission based on the received at least first part of the at least one further retransmission process indicator and based on the provided at least second part of the retransmission process indicator. The further improved embodiment provides the advantage of avoiding a transmission of two or more full size retransmission process indicators. Thereby, the signaling overhead can be further decreased for example for a retransmission of combined HARQ processes such as described in EP 2 131 518 A2 or EP 2178239 A2. The further improved embodiment may be applied, if for example a retransmission of a former initial transmission and a new initial transmission are superimposed for example by a modulo-2 addition to a combination by the transmitting apparatus and the combination is transmitted from the transmitting apparatus to the receiving apparatus such as described for example in EP 2131518 A2 or EP 2178239 A2. In such a case, e.g. a first part of the further retransmission process indicator for the further retransmission of the further former initial transmission is explicitly signaled to the receiving apparatus and a second part of the further retransmission process indicator is implicitly signaled to the receiving apparatus based on the applied one of the at least two states of the parameter and based on the explicitly signaled first part of the further retransmission process indicator.

According to further alternative embodiments, the initial transmission, a retransmission for the initial transmission and further retransmissions for the initial transmission are allocated to a same state or are allocated alternating to the first one of the at least two states and to the second one of said at least two states.

Preferably, a number of retransmission processes may be equal to a multiplication of a number of values applied for the at least one first part of the retransmission process indicator by a number of the applied two or more than two states.

More preferably, the number N of retransmission processes, the number s of the at least two states, and the number m of bits for transmitting the at least first part of the retransmission process indicator may fulfill the equation $N = 2^m \times s$. In further preferred alternative embodiments, the number of retransmission processes between the transmitting apparatus and the receiving apparatus may be given as a binary number and the one of the at least two states may be interpreted as at least one least significant bit or as at least one most significant bit for determining the retransmission process indicator.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows a block diagram of an exemplary radio communication network for performing an asynchronous retransmission method.

Figure 2 a) shows a conventional HARQ protocol as applied in 3GPP LTE and Figure 2 b) shows a method for signalling and providing retransmission process indicators according to a first embodiment of the invention.

Figures 3 a) and b) show further methods for signalling and providing retransmission process indicators in accordance to two further embodiments of the invention.

Figure 4 shows a flow diagram of a method according to the embodiments of the invention.

Figures 5 a) and b) show even further methods for signalling and providing retransmission process indicators in accordance to two even further embodiments of the invention.

Figure 6 shows a further embodiment for signalling and providing retransmission process indicators.

Figures 7 a) and b) show block diagrams of a transmitting apparatus and a receiving apparatus according to the embodiments of the invention.

## DESCRIPTION OF THE EMBODIMENTS

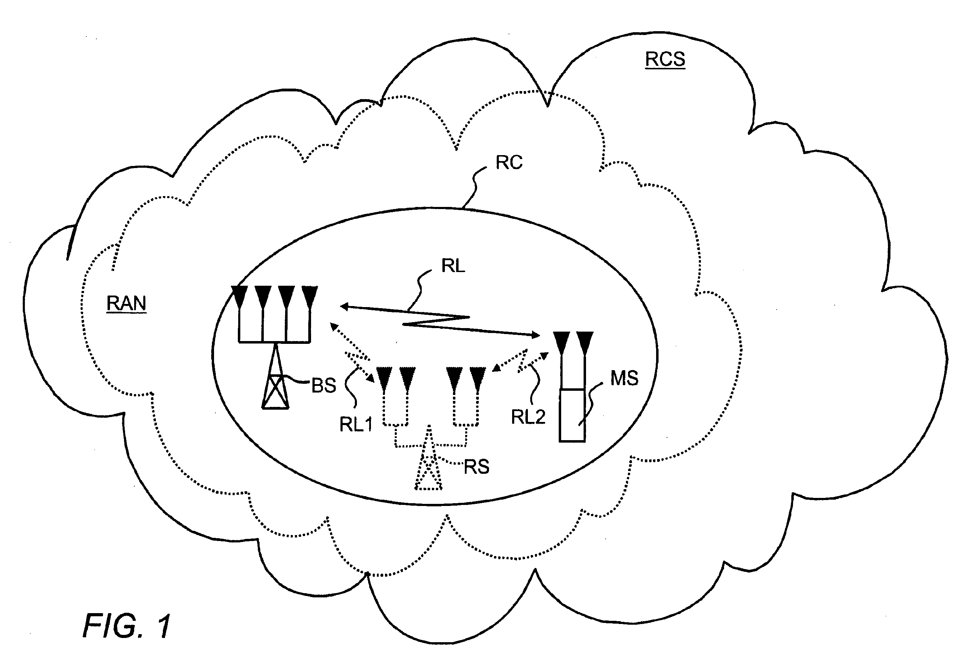

Figure 1 shows a radio communication system RCS comprising a radio access network RAN. The core network of the radio communication system RCS and connections of the radio communication system RCS to further radio communication systems, to the Internet or to fixed line communications systems are not shown for simplification.

The radio communication system RCS may be for example a 3GPP LTE radio communication network using OFDM (OFDM = Orthogonal Frequency Division Multiplexing). In further alternatives, the radio communication system RCS may for example a 3GPP UMTS/HSPA radio communication network (UMTS = Universal Mobile Telecommunication Systems, HSPA = High Speed Packet Access), a WIMAX radio communication network (WiMAX = Worldwide Interoperability for Microwave Access) based for example on the IEEE 802.16d standard (IEEE = Institute of Electrical and Electronics Engineers), or a WLAN (WLAN) based for example on the IEEE 802.11 g standard.

The radio access network RAN comprises a base station BS. The term "base station" may be considered synonymous to and/or referred to as a base transceiver station, base station, Node B, enhanced Node B, access point etc. and may describe equipment that provides connectivity via a radio link between the radio communication system RCS and one or more mobile stations.

Further base stations of the radio access network RAN, further network nodes of the radio communication system RCS, connections between base stations, and connections between base stations and further network nodes of the radio communication system RCS are not shown for simplification.

The base station BS provides wireless coverage for a specific geographical area being a radio cell RC. The term "radio cell" considered synonymous to and/or referred to as radio cell, cell, radio sector, sector etc.

A mobile station MS is located within a wireless coverage area of the radio cell RC.

The term "mobile station" may be considered synonymous to, and may hereafter be occasionally referred to, as a mobile unit, mobile station, mobile user, access terminal, user equipment, subscriber, user, remote station etc. The mobile station MS may be for example a cellular telephone, a portable computer, a pocket computer, a hand-held computer, a personal digital assistant, a USB flash drive with a radio interface or a car-mounted mobile device.

The base station BS communicates with the mobile station MS via a radio link RL. The base station BS and the mobile station MS may use on a downlink from the base station BS to the mobile station MS a retransmission scheme such as a HARQ transmission scheme and/or may use on an uplink from the mobile station MS to the base station BS a further retransmission scheme. The retransmission scheme and/or the further retransmission scheme may be asynchronous, which means that there is no time period predefined for the time between an initial transmission and a retransmission for the initial transmission.

In an alternative, the radio cell RC may further comprise a relay station RS (indicated by dotted lines in Figure 1). In such a case, the base station BS may communicate with the relay station RS via a first radio link RL1 and the relay station RS may communicate with the mobile station MS via a second radio link RL2 and on one or both radio links RL1, RL2 a HARQ transmission scheme may be applied.

In a further alternative, the base station BS may communicate with the relay station RS via the first radio link RL1, the relay station RS may communicate with the mobile station MS via the second radio link RL2, and the base station BS may communicate with the mobile station MS via the radio link RL for transmitting for example signalling information between the base station BS and the mobile station MS. In an even further alternative, a communication between the base station BS and the mobile station MS is relayed by more than one relay station.

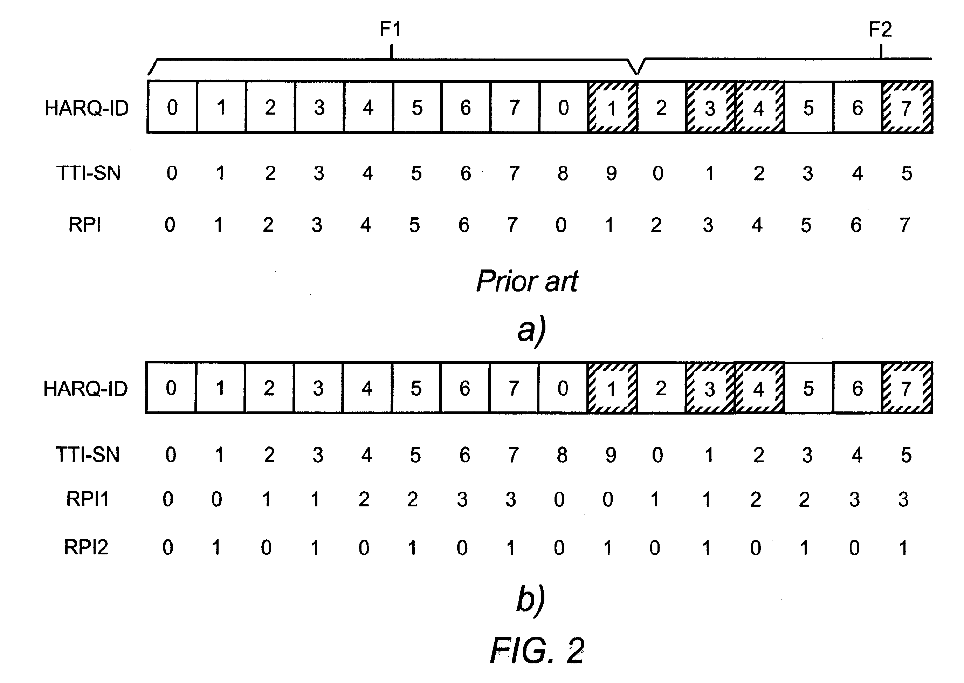

The retransmission scheme will be described and compared in the following with a common HARQ transmission scheme as defined by 3GPP LTE (see Figure 2 a)). In 3GPP LTE the HARQ transmission scheme in downlink direction from a so-called eNodeB (base station term in LTE) to a UE (UE = user equipment) applies eight simultaneous HARQ processes per UE. This means, that each initial transmission or each retransmission uses one of eight retransmission process indicators. The HARQ process ID HARQ-ID in a number range from 0 to 7 for an initial transmission or a retransmission is explicitly signalled by a retransmission process indicator RPI on a downlink link control channel (e.g. the Physical Downlink Control Channel PDCCH in case of LTE, cf. 3GPP Technical Specification 36.211) by 3 bits in advance to the initial transmission or the retransmission or within the same TTI as applied for the initial transmission or the retransmission.

In 3GPP LTE a TTI is also called a subframe with a time length of 1 ms. A radio frame of a time length of 10 ms consists of 10 subframes, which are numbered serially from #0 to #9. Such a serial numbering can be provided for example by applying a modulo 10 arithmetic to an endless sequence of TTI sequence numbers. Figure 2 a) shows a first radio frame F1 with all TTIs from #0 to #9 and a second radio frame F2 with TTIs from #0 to #5.

A HARQ RTT (RTT = round-trip time) is equal to 8 time slots, a.k.a. TTIs, e.g. an initial packet transmission with HARQ process ID #0 takes place in TTI #0, ACK/NACK on uplink from the UE to the eNodeB arrives in TTI #4 and in case of ACK a new initial transmission for HARQ process ID #0 can be performed in TTI #8 (see Figure 2 a)) or in any later TTI (within a configurable window of for example 50 TTIs). Figure 2 a) indicates each of 16 TTis by a rectangle. TTI sequence numbers TTI-SN are given below the rectangles. The HARQ process IDs HARQ-ID are given within the rectangles. Initial transmissions are shown as not hatched rectangles and retransmissions for previous initial transmissions are shown as hatched rectangles. This means that for the eight initial transmissions during TTI sequence numbers TTI-SN 0 to 7 retransmissions are required in TTI sequence number TTI-SN #9 of the first radio frame F1 for a second HARQ process ID #1, in TTI sequence number TTI-SN #1 of the second radio frame F2 for a fourth HARQ process ID #3, in TTI sequence number TTI-SN #2 of the second radio frame F2 for a fifth HARQ process ID #4 and in TTI sequence number TTI-SN #5 of the second radio frame F2 for an eighth HARQ process ID #7. For the TTI sequence number TTI-SN #8 of the first radio frame F1 and the TTI sequence numbers TTI-SN #0, #3 and #4 of the second radio frame F2 further initial transmissions are provided from the eNodeB to the UE with HARQ process IDs #0, #2, #5 and #6. Whether a transmission for a specific HARQ process ID is an initial transmission or a retransmission is indicated from the eNodeB to the UE with a further control signalling bit, which is a so-called new data indicator (not shown in Figure 2 a) for simplification).

The present invention provides an improved method for signalling a retransmission process indicator such as the HARQ process ID applied in 3GPP LTE based on following general principle:

The retransmission process indicator RPI for an initial transmission or a retransmission may be given regarding Figure 2 b) in binary notation $RPI_{1-3}$ with 3 bits and may be split into a first integral part $RPI1_{1-2}$ for the two most significant bits by setting the least significant bit to "0" and a second integral part $RPI2_3$ for the least significant bit by setting the two most significant bits to "0" by using for example following equation:

$$RPI_{1-3} = RPI1_{1-2} + RPI2_3 \qquad (1)$$

For example $RPI_{1-3}$ = 101 is split into $RPI1_{1-2}$ =100 and $RPI2_3$ = 001

In a further step the first and the second integral parts may be further reduced or compressed by deleting the corresponding set zero bit(s).

According to the above example this means that $RPI1_{1-2}$ and $RPI2_3$ are further reduced to $RPI1_{1-2}$=10 and $RPI2_3$ =1.

The first integral part RPI1 may be transmitted as a whole from the base station BS to the mobile station MS. Alternatively, the first integral part RPI1 may be further split into two or more than two first integral sub-parts and the two or more than two first integral sub-parts may be transmitted separately from the base station BS to the mobile station MS.

Similarly, the second integral part RPI2 may be provided from the base station BS to the mobile station MS not by an explicit transmission of the second integral part RPI2 but by a correlation to a radio resource parameter that is used for the initial transmission or the retransmission. Alternatively, the second integral part RPI2 may be further split into two or more than two second integral sub-parts and the two or more than two second integral sub-parts may be provided from the base station BS to the mobile station MS by two or more correlations to two or more radio resource parameters that are used for the initial transmission or the retransmission. The radio resource parameter or the two or more radio resource parameters may belong to a transmission of the first integral part or the two or more than two first integral sub-parts and/or may belong to the initial transmission or the retransmission itself. The correlation may be based for example on a mapping table between the information in the second integral part RPI2 and a range of the radio resource parameter. The mapping table may be stored at the base station BS and the mobile station MS. According to Figure 2 b) the radio resource parameter is a time parameter and the time parameter is a sub-frame such as a TTI of the radio frames F1, F2. Even numbered TTIs (#0, #2, #4, #6, #8) are allocated to a first bit state "0" and odd numbered TTIs (#1, #3, #5, #7, #9) are allocated to a second bit state "1". In following Table 1 a decimal and a binary notation of the HARQ process ID HARQ-ID are shown. In a common LTE HARQ mechanism, the binary notation of the HARQ process ID HARQ-ID is transmitted as the retransmission process indicator RPI from the eNodeB to the UE. In following mapping table 2 the binary version of the retransmission process indicator RPI is split exemplarily into the first integral part RPI1 denoted as a first retransmission process indicator in the following and the second integral part RPI2 denoted as a second retransmission process indicator in the following. The first retransmission process indicator RPI1 contains the most significant bit and a middle bit of the binary version of the retransmission process indicator RPI and the second retransmission process indicator RPI2 contains the least significant bit of the binary version of the retransmission process indicator RPI. The mapping between even and odd numbered TTIs and bit states "0" and "1" is shown in columns 3 and 4 of mapping Table 2. Regarding Figure 2 b) and the mapping table 2 the bit states "0" and "1" of the second retransmission process indicator RPI2 are interpreted as a least significant bit of the retransmission process indicator RPI. In comparison to Table 1, the transmission of the first retransmission process indicator RPI1 requires one bit less than the transmission of the overall retransmission process indicator RPI.

Table 1

| HARQ-ID decimal | HARQ-ID binary, RPI |
|---|---|
| 0 | 000 |
| 1 | 001 |
| 2 | 010 |
| 3 | 011 |
| 4 | 100 |

(continued)

| HARQ-ID decimal | HARQ-ID binary, RPI |
|---|---|
| 5 | 101 |
| 6 | 110 |
| 7 | 111 |

Mapping table 2

| HARQ-ID decimal | RPI1 binary | RPI2 binary | TTI-SN |
|---|---|---|---|
| 0 | 00 | 0 | 0 |
| 1 | 00 | 1 | 1 |
| 2 | 01 | 0 | 2 |
| 3 | 01 | 1 | 3 |
| 4 | 10 | 0 | 4 |
| 5 | 10 | 1 | 5 |
| 6 | 11 | 0 | 6 |
| 7 | 11 | 1 | 7 |

The state of the second retransmission process indicator RPI2 only depends on the TTI sequence number TTI-SN. The mapping of the TTI sequence numbers TTI-SN to the states of the second retransmission process indicator RPI2 can be obtained for example by applying a modulo 2 arithmetic to the TTI sequence numbers TTI-SN and by using the remainder of the modulo 2 arithmetic as the state of the second retransmission process indicator RPI2.

In an alternative, the bit states "0" and "1" of the second retransmission process indicator RPI2 may be interpreted as a most significant bit of the retransmission process indicator RPI, which is shown in mapping table 3. In such a case, a sequence of HARQ process IDs HARQ-ID is changed from a serial numbering (see Table 2) to following sequence: #0, #4, #1, #5, #2, #6, #3, #7.

Mapping table 3

| HARQ-ID decimal | TTI-SN | RPI2 binary | RPI1 binary |
|---|---|---|---|
| 0 | 0 | 0 | 00 |
| 4 | 1 | 1 | 00 |
| 1 | 2 | 0 | 01 |
| 5 | 3 | 1 | 01 |
| 2 | 4 | 0 | 10 |
| 6 | 5 | 1 | 10 |
| 3 | 6 | 0 | 11 |
| 7 | 7 | 1 | 11 |

The mobile station MS, which receives the initial transmission or the retransmission and the first retransmission process indicator RPI1 obtains the information of the second retransmission process indicator RPI2 by applying the mapping table 2 or 3 to the TTI sequence numbers TTI-SN, which are known from a position of a TTI within the radio frame F1, F2. Then, the mobile station MS combines the first retransmission process indicator RPI1 and the second retransmission process indicator RPI2 to determine the overall retransmission process indicator RPI for the initial transmission or for the retransmission. In case of Figure 2 b) and mapping table 2, the mobile station MS adds the second retransmission process indicator RP12 as the least significant bit to the bits of the first retransmission process indicator RPI1, and in case of the mapping table 3, the mobile station MS adds the second retransmission process indicator RPI2 as the most significant bit to the bits of the first retransmission process indicator RPI1.

Preferably, an initial transmission, a retransmission for the initial transmission and if required further retransmissions for the initial transmission may be allocated to a same state such as the bit state "0" or the bit state "1". But it is also possible, that the initial transmission, the retransmission for the initial transmission and if required the further retransmissions for the initial transmission may be allocated alternating to the first one of two states and to the second one of the two states. According to Figure 2 b) the number of simultaneous HARQ processes is 8, the number of different versions of the first retransmission process indicator RPI1 is 4 and the number of different states for the second retransmission process indicator is 2. This means that the number of simultaneous HARQ processes is equal to a multiplication of the number of the different decimal values of the first retransmission process indicator RPI1 by the number of different states for the second retransmission process indicator.

A number N of simultaneous HARQ processes fulfills following equation:

$$N = 2^m \times s \qquad (2)$$

with:

s: number of states,
m: number of digital bits for transmitting the first retransmission process indicator RPI1.

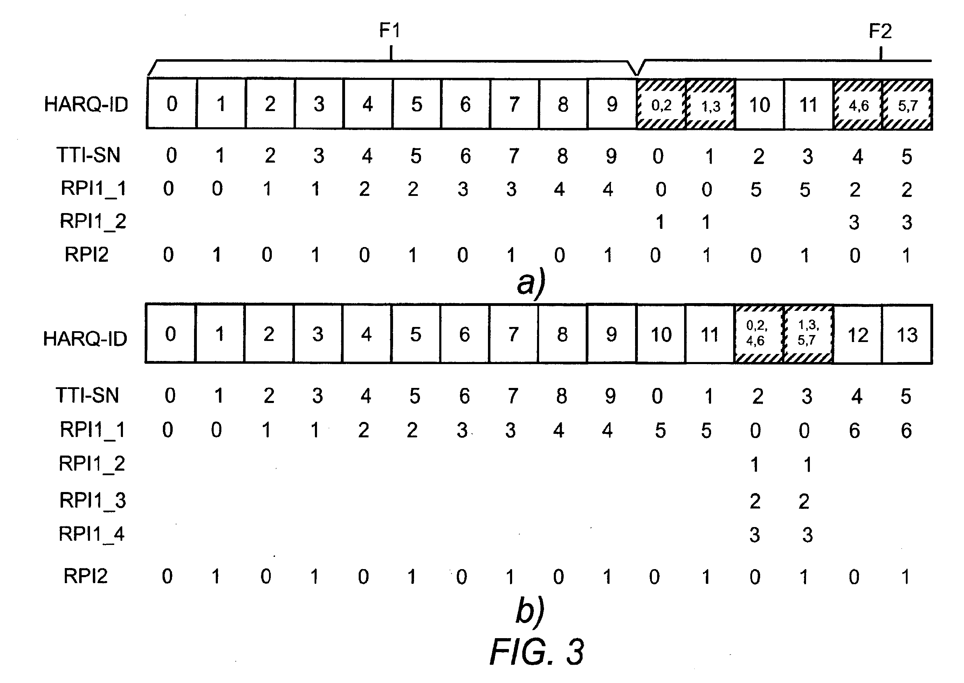

According to Figure 3 a) and 3 b) a number of HARQ process IDs HARQ-ID is increased from 8 to 16 (not all HARQ process IDs HARQ-ID are shown in Figure 3 a) and 3 b) for simplification) in comparison to Figure 2 a) and 2 b). In Figure 3 a) initial transmissions are performed during TTI sequence numbers TTI-SN #0 to #9 of the first radio frame F1 and during TTI sequence numbers TTI-SN #2 and #3 of the second radio frame F2 for HARQ process IDs HARQ-ID #0 to #11. During TTI sequence number TTI-SN #0 of the second radio frame F2 a retransmission may be performed for the HARQ process ID HARQ-ID #0 by combining further redundancy information for the HARQ process ID HARQ-ID #0 with a new initial transmission for the HARQ process ID HARQ-ID #2. Such a combination of a retransmission with a new initial transmission is described for example in EP 2131518 A2 or EP 2178239 A2. Alternatively, during the TTI sequence number TTI-SN #0 of the second radio frame F2 a retransmission may be performed by combining further redundancy information of the HARQ process IDs HARQ-ID #0 and #2, which are combined or superimposed by a method such as described for example in US 2010/0061287 A1 for a binary XOR addition or modulo 2 addition of three or more packets. In an equal manner during TTI sequence numbers TTI-SN #1, #4 and #5 of the second radio frame F2 a retransmission may be performed either for one of the HARQ process IDs by applying a combination of further redundancy information of one of the two respective HARQ process IDs with a new initial transmission of the further one of the two respective HARQ process IDs or a retransmission may be performed for both HARQ process IDs by applying a combination of further redundancy information for both HARQ processes. According to Figure 3 a) the combination and transmission of two HARQ processes are executed during an odd or even TTI sequence number TTI-SN in such a way, that initial transmissions of both HARQ process IDs HARQ-ID belong to TTI sequence numbers TTI-SN of a same state. For example the initial transmissions for HARQ process IDs #0, #2 are performed by TTI sequence numbers TTI-SN #0 and #2, which are both even sequence numbers. The retransmission for one or both of the HARQ process IDs #0, #2 based on a combination of further redundancy information for one HARQ process ID and new data of a further initial transmission for the other HARQ process ID or based on a combination of further redundancy information for both HARQ process IDs is applied by the TTI sequence number TTI-SN #0 of the second radio frame F2, which is also an even sequence number. The mapping between the TTI sequence numbers TTI-SN, a first retransmission process indicator RPI1_1 and the second retransmission process indicator RPI2 is shown by following mapping table 4:

Mapping table 4

| HARQ-ID decimal | RPI1_1 decimal | RPI1_1 binary | RPI2 binary | TTI-SN |
|---|---|---|---|---|
| 0 | 0 | 000 | 0 | 0 |
| 1 | 0 | 000 | 1 | 1 |
| 2 | 1 | 001 | 0 | 2 |
| 3 | 1 | 001 | 1 | 3 |
| 4 | 2 | 010 | 0 | 4 |

(continued)

| HARQ-ID decimal | RPI1_1 decimal | RPI1_1 binary | RPI2 binary | TTI-SN |
|---|---|---|---|---|
| 5 | 2 | 010 | 1 | 5 |
| 6 | 3 | 011 | 0 | 6 |
| 7 | 3 | 011 | 1 | 7 |
| 8 | 4 | 100 | 0 | 8 |
| 9 | 4 | 100 | 1 | 9 |
| 10 | 5 | 101 | 0 | 0 |
| 11 | 5 | 101 | 1 | 1 |
| ... | ... | ... | ... | ... |
| 15 | 7 | 111 | 1 | 7 |

The first retransmission process indicator RPI1_1 is shown in Figure 3 a) in a decimal notation. The mapping table 4 shows the corresponding binary notation. The decimal HARQ process ID HARQ-ID is equal to a summation of the bits of the binary version of the first retransmission process indicator RPI1_1 and the bit of the second retransmission process indicator RPI2 as a least significant bit. If a retransmission is performed by a combination of two HARQ processes, a further first retransmission process indicator RPI1_2 needs to be transmitted from the base station BS to the mobile station MS for example on a control channel or by a so-called in-band signalling, which means, that the further first retransmission process indicator RPI1_2 may be transmitted together with the radio transmission data for example on a same user data channel. Due to the grouping of eight HARQ processes (#0, #2, #4, #6, #8, #10, #12, #14) with even TTI sequence numbers TTI-SN which can be combined for a retransmission and further eight HARQ processes (#1, #3, #5, #7, #9, #11, #13, #15) with odd TTI sequence numbers TTI-SN, which can be combined to a further retransmission, the second retransmission process indicator RPI2 can also be used and is also valid for the further first retransmission process indicator RPI1_2. This means, that the second retransmission process indicator RPI2, which is deduced by the mobile station MS from the mapping table 4, can be applied also for an identification of a second HARQ process ID by a summation of the received bits of the binary version of the further first retransmission process indicator RPI1_2 and the bit of the second retransmission process indicator RPI2 for example as a least significant bit as shown in mapping table 4.

The method described according to Figure 3 a) is extended to combination of four HARQ processes as shown in Figure 3 b). Regarding Figure 3 b) initial transmissions are performed during TTI sequence numbers TTI-SN #0 to #9 of the first radio frame F1 and during TTI sequence numbers TTI-SN #0, #1, #4 and #5 of the second radio frame F2 for HARQ process IDs HARQ-ID #0 to #13. During TTI sequence number TTI-SN #2 of the second radio frame F2 a retransmission may be performed for a combination such as a modulo-2 addition of HARQ process IDs #0, #2, #4 and #6. The combination may be based for example on a combination of three retransmissions for HARQ process IDs #0, #2 and #4 and of one new initial transmission for HARQ process ID #6. Such a combination of several retransmissions with a new initial transmission is similar to a method as described in EP 2131518 A2 or EP 2178239 A2 for a simple combination of two HARQ processes. Alternatively, during the TTI sequence number TTI-SN #2 of the second radio frame F2 a retransmission may be performed for redundancy versions of the HARQ process IDs HARQ-ID #0, #2, #4 and # 6 which are combined by a method such as described for example in US 2010/0061287 A1. In an equal manner during TTI sequence number TTI-SN #3 of the second radio frame F2 a retransmission may be performed either by applying a similar method as described in EP 2131518 A2 or EP 2178239 A2 with at least one new initial transmission or by applying a similar method as described in US 2010/0061287 A1 with a combination of only redundancy versions of previous initial transmissions. According to Figure 3 b) the combination of four HARQ processes are executed in such a way, that all four HARQ process IDs HARQ-ID belong to TTI sequence numbers TTI-SN, which are either both odd or both even sequence numbers. For example the HARQ process IDs #0, #2, #4, #6 of the TTI sequence number TTI-SN #2 of the second radio frame F2 belong to the TTI sequence numbers TTI-SN #0, #2, #4, #6, which are all even sequence numbers. The mapping table 4 as described above may also be used for the mapping between the TTI sequence numbers TTI-SN and the second retransmission process indicator RPI2 regarding the embodiment of Figure 3b).

In comparison to the combinations of two HARQ processes shown in Figure 3 a), for the combinations of four HARQ processes regarding Figure 3 b) three further first retransmission process indicators RPI1_2, RPI1_3, RPI1_4 need to be transmitted from the base station BS to the mobile station MS for example on the control channel or by the in-band signalling. Due to the grouping of eight HARQ processes (#0, #2, #4, #6, #8, #10, #12, #14) with even TTI sequence numbers TTI-SN which can be combined for a retransmission and further eight HARQ processes (#1, #3, #5, #7, #9, #11, #13, #15) with odd TTI sequence numbers TTI-SN, which can be combined to a further retransmission, no further second retransmission process indicators need to be provided from the base station BS to the mobile station MS by further correlations to further radio resource parameters. The second retransmission process indicator RPI2, which is deduced by the mobile station MS from the mapping table 4, can be applied also for an identification of the remaining three HARQ process IDs of a combination by a summation of the received bits of the binary version of the further first retransmission process indicators RPI1_2, RPI1_3, RPI1_4 and the bit of the second retransmission process indicator RPI2 for example as a least significant bit as shown in mapping table 4.

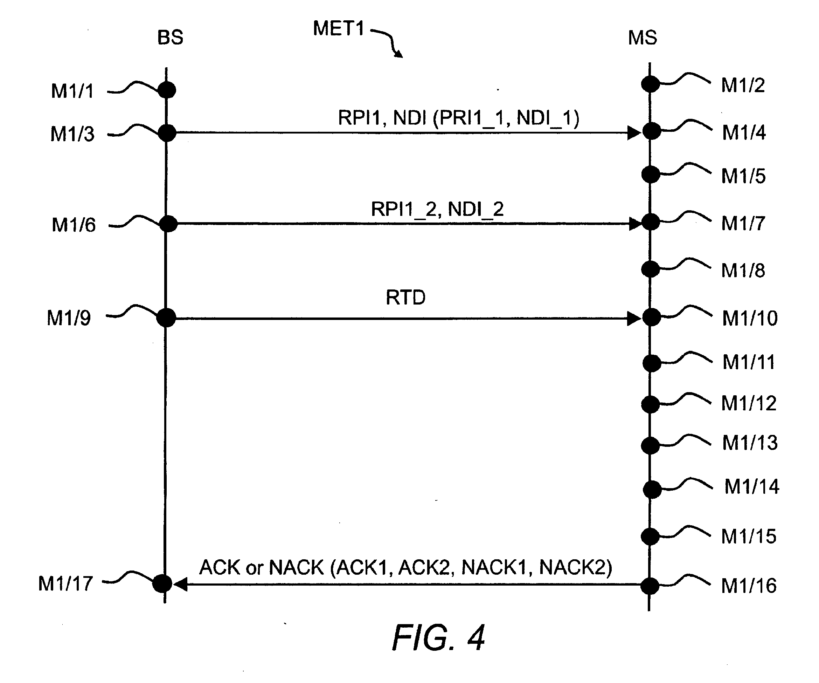

Referring to Figure 4 a flow diagram of a method MET1 in accordance to an embodiment of the invention is shown. The number of the steps for performing the method MET1 is not critical, and as can be understood by those skilled in the art, that the number of the steps and the order of the steps may vary without departing from the scope of the invention.

The method MET1 is shown with respect to a downlink transmission from the base station BS to the mobile station MS of downlink user data for a service such as Web browsing or a VoIP call (VoIP = Voice of Internet Protocol) running at the mobile station MS and/or of a signalling command for controlling the mobile station MS. If the relay station RS as shown in Figure 1 is used between the base station BS and the mobile station MS, a similar downlink method may be performed between the base station BS and the relay station RS and/or between the relay station RS and the mobile station MS.

As can be understood by those spilled in the art, a similar method may be performed for an uplink transmission of uplink user data from the mobile station MS to the base station BS. If the relay station RS is used between the mobile station MS and the base station BS, a similar uplink method may be performed between the mobile station MS and the relay station RS and/or between the relay station RS and the base station BS.

The method MET1 is exemplarily described with respect to Figure 2 b) and Figure 3a). For a person skilled in the art, the method MET1 is also easily applicable to the other embodiments shown in Figures 3 b), 5 a), 5 b) and 6.

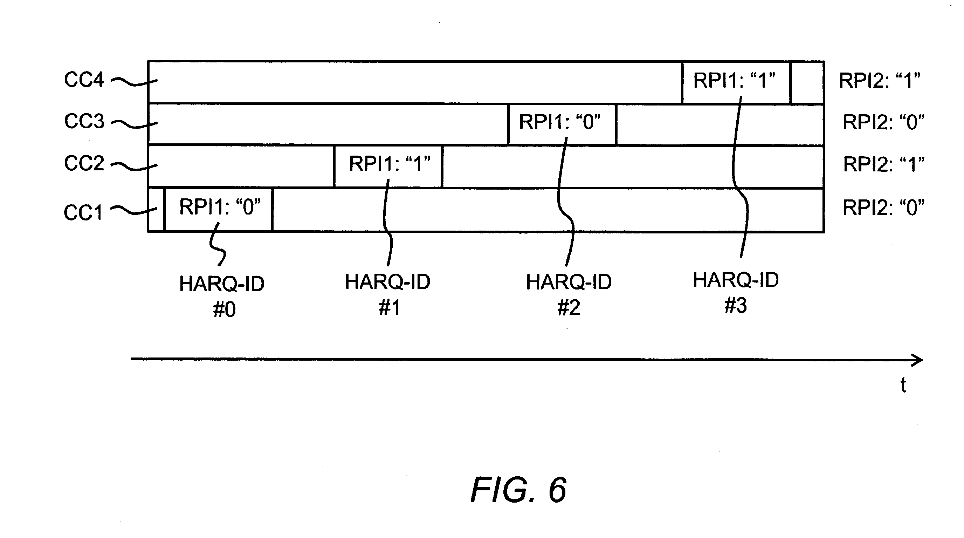

In a first step M1/1, a mapping is predefined at the base station BS between a first state of the second retransmission process indicator RPI2 (state "0") and a first range of said radio resource parameter (TTI sequence numbers TTI-SN #0, #2, #4, #6, #8) for transmitting radio transmission data RTD and between a second state of the retransmission process indicator RPI2 (state "1") and a second range of the radio resource parameter (TTI sequence numbers TTI-SN #1, #3, #5, #7, #9) for transmitting the radio transmission data RTD. This means, that the second retransmission process indicator RPI2 is mapped to the transmission of the radio transmission data RTD. According to a further embodiment, which is described later according to Figure 6, the second retransmission process indicator RPI2 may be alternatively mapped to the transmission of the first retransmission process indicator RPI1.

In a further step M1/2, the mapping is also predefined at the mobile station MS between the first state of the second retransmission process indicator RPI2 (state "0") and the first range of said radio resource parameter (TTI sequence numbers TTI-SN #0, #2, #4, #6, #8) and between the second state of the retransmission process indicator RPI2 (state "1") and the second range of the radio resource parameter (TRI sequence numbers TTI-SN #1, #3, #5, #7, #9).

In a next step M1/3, the base station BS transmits for example via a control channel by applying an asynchronous HARQ method the first retransmission process indicator RPI1 (see Figure 2 b)) for a HARQ process ID HARQ-ID #2 for the first radio frame F1 and a new data indicator NDI for example set to state "1" for a next initial transmission of the radio transmission data RTD to the mobile station MS, which receives the first retransmission process indicator RPI1 or RPI1_1 in a further step M1/4. Correspondingly in case of a retransmission with further redundancy information for a previous initial transmission, the new data indicator NDI is set to state "0". Alternatively and referring to 3GPP LTE, there may be no fixed relation between states of the new data indicator NDI and initial transmissions and retransmissions. By using such an alternative, a new initial transmission may be indicated by a change of state of the new data indicator NDI from state "0" to state "1" or vice versa, and a retransmission by no change of state of the NDI, when comparing the state of the received new data indicator NDI to the previous state of new data indicator NDI received for the same HARQ process number.

Alternatively, the first retransmission process indicator RPI1 may be split by the base station BS into two or more than two parts and the base station BS performs separate transmissions to the mobile station MS for the two or more than two parts. For example the base station BS may split the first retransmission process indicator RPI1 into two parts and the base station BS transmits a first part of the two parts via the step M1 /3 and transmits a second part of the two parts for example via in-band signaling. The mobile station MS, which receives the two or more than two parts performs a combination of the two or more than two parts, which is an inverse process to the splitting performed by the base station BS, to obtain the first retransmission process indicator RPI1.

According to the embodiment of Figure 3 a), the base station BS transmits the first retransmission process indicator RPI1_1 for a HARQ process ID HARQ-ID #0 of the second radio frame F2 and a new data indicator NDI set to state "0" for a next retransmission of radio transmission data RTD to the mobile station MS.

The first retransmission process indicator RPI1 or RPI1_1 and new data indicator NDI or NDI_1 may be transmitted for example as part of a scheduling grant such as applied in 3GPP LTE. The scheduling grant contains further information such as a frequency location of the PRBs (PRB = physical resource block) used for transmission of radio transmission data RTD such as applied in 3GPP LTE. It is possible, but a time location such as a TTI of the radio transmission data RTD must not be explicitly signaled from the base station BS to the mobile station MS. In case of 3GPP LTE, the radio transmission data RTD are located in a same TTI as applied for the transmission of the scheduling grant. In case of 3GPP HSDPA (HSDPA = High Speed Downlink Packet Access), the scheduling grant is transmitted two time slots ahead to the transmission of the radio transmission data RTD, so that the mobile station MS implicitly knows, if it receives a scheduling grant, that the radio transmission data RTD will be received after two further time slots.

In a next step M1/5, the mobile station MS may store the received first retransmission process indicator RPI1 or RPI1_1 and the received new data indicator NDI or NDI_1 for later processing.

In case of the embodiment of Figure 3 a), the base station BS transmits in a further step M1/6 the further first retransmission process indicator RPI1_2 for a HARQ process ID HARQ-ID #2 of the second radio frame F2 and a further new data indicator NDI_2 set to state "0" for the next retransmission of the radio transmission data RTD to the mobile station MS, which receives the further first retransmission process indicator RPI1_2 and the further new data indicator NDI_2 in a next step M1/7.

In a further step M1/8, the mobile station MS may store the received further first retransmission process indicator RPI1_2 and the received further new data indicator NDI_2 for later processing.

In a next step M1/9, the base station BS transmits the radio transmission data RTD to the mobile station MS, which receives the radio transmission data RTD in a further step M1/10. Depending on an implicit or explicit signaling of the time location of the radio transmission data RTD as described above, the base station BS applies for the transmission of the radio transmission data RTD a TTI sequence number TTI-SN, which corresponds to this implicit or explicit signaling. Thereby, the base station BS provides implicitly the second retransmission process indicator RPI2 to the mobile station MS, because the radio transmission data RTD are transmitted with a TTI sequence number TTI-SN #2 (see Figure 2 a)) or with a TTI sequence number TTI-SN #0 (see Figure 3 a)), which are both even numbers and therefore both mapped to the state "0" of the second retransmission process indicator RPI2.

In next steps M1/11 to M1/13, the mobile station MS identifies the HARQ process ID HARQ-ID of the initial transmission (see Figure 2 b) or of the retransmission (see Figure 3 a)) based on the received first retransmission process indicator RPI1 or RPI1_1 and based on the provided second retransmission process indicator RPI2. Therefore, the mobile station MS derives the TTI sequence number based on an application of a conventional downlink frame synchronization algorithm. In LTE for example predefined synchronization signals are transmitted within predefined time-frequency positions of each radio frame. A time location of these synchronization signals is detected by the mobile station MS, e.g. by computing the cross-correlation of the predefined sequences with the received sequences. From the detected time location of the synchronization sequences the position of a radio frame and a position of a TTI sequence number in time can be uniquely derived.

By step M1/11, the mobile station MS deduces the second retransmission process indicator RPI2 based on the TTI sequence number TTI-SN #2 (see Figure 2 a)) or the TTI sequence number TTI-SN #0 (see Figure 3 a)), which have been applied for the transmission of the radio transmission data RTD and based on the predefined mapping.

In step M1/12, the mobile station MS may store the deduced second retransmission process indicator RPI2 for later processing in step M1/13.

By step M1 /13, the mobile station MS determines retransmission process indicator RPI for the HARQ process ID HARQ-ID #2 (see Figure 2 b)) or #0 (see Figure 3 a)) from the received first retransmission process indicator RPI1 (see Figure 2 b)) or RPI1_1 (see Figure 3 a)) and from the deduced second retransmission process indicator RPI2. Such a determination may be for example based on generating a bit sequence of the bits of the first retransmission process indicator RPI1 and of the bit of the second retransmission process indicator RPI2 as described above and based on a following interpretation of the bit sequence. The mobile station MS performs for example an algorithm, which is inverse to the algorithm, which is described with respect to equation (1).

In case of the embodiment of Figure 3 a), the mobile station MS further identifies in a next step M1 /14 the further retransmission process indicator RPI for the HARQ process ID HARQ-ID #2 by determining the further retransmission process indicator RPI for the HARQ process ID HARQ-ID #2 from the received further first retransmission process indicator RPI1_2 and from the deduced second retransmission process indicator RPI2 by generating a further bit sequence similar to the method as described above.

In a further step M1/15, the mobile station MS performs a conventional data recovery for the received radio transmission data RTD for an initial transmission or a retransmission of a single HARQ process, for example, by a maximal ratio combining of the sampled receive signals of the initial transmission and retransmission(s) of the initial transmission prior to demodulation and decoding such as described for example in Chapter 3.2 of D. Tse and P. Viswanath, "Fundamentals of Wireless Communication," Cambridge University Press 2005, or alternatively by adding soft bits, e.g. logarithmic likelihood ratios, after demodulation of the initial transmission and the retransmission(s) prior to the decoding, or for a combined retransmission such as described for example in EP 2131518 A2 or EP 2178239 A2 for a combination of an initial transmission and a retransmission or in US 2010/0061287 A1 for a combination of two or more retransmissions. Regarding the embodiment of Figure 2 b) in a next step M1/16, the mobile station MS may transmit an acknowledgement ACK, if the mobile station MS has successfully recovered the received radio transmission data RTD or transmits a negative acknowledgement NACK, if the mobile station MS has not successfully recovered the received radio transmission data RTD. In a further step M1/17, the base station BS receives the acknowledgement ACK or the negative acknowledgement NACK. According to the embodiment of Figure 3 a), the mobile station MS may transmit a first acknowledgement ACK1, if the mobile station MS has successfully recovered the received radio transmission data RTD of the HARQ process ID HARQ-ID #0 or transmits a first negative acknowledgement NACK1, if the mobile station MS has not successfully recovered the received radio transmission data RTD of the HARQ process ID HARQ-ID #0. Equally, the mobile station MS may transmit a second acknowledgement ACK2, if the mobile station MS has successfully recovered the received radio transmission data RTD of the HARQ process ID HARQ-ID #2 or transmits a second negative acknowledgement NACK2, if the mobile station MS has not successfully recovered the received radio transmission data RTD of the HARQ process ID HARQ-ID #2.

In further steps, which are not shown for simplification, the base station BS transmits a new initial transmission for the same HARQ process ID and a corresponding first retransmission process indicator RPI1 or RPI1_1 if the base station BS has received the acknowledgement ACK, ACK1 or ACK2 or the base station BS transmits a further redundancy version for the same HARQ process ID and a corresponding retransmission process indicator RPI1 or RPI1_1 if the base station BS has received the negative acknowledgement NACK, NACK1 or NACK2. An explicit transmission of the acknowledgement ACK, ACK1 or ACK2 is not required, if for example it is predefined at the base station BS and the mobile station MS, that the acknowledgement doesn't need to be transmitted, if the base station BS starts a timer at the point of time, when the radio transmission data RTD are transmitted and if the base station BS interprets a non-reception of the acknowledgement ACK, ACK1 or ACK2 as a successful data recovery at the mobile station MS.

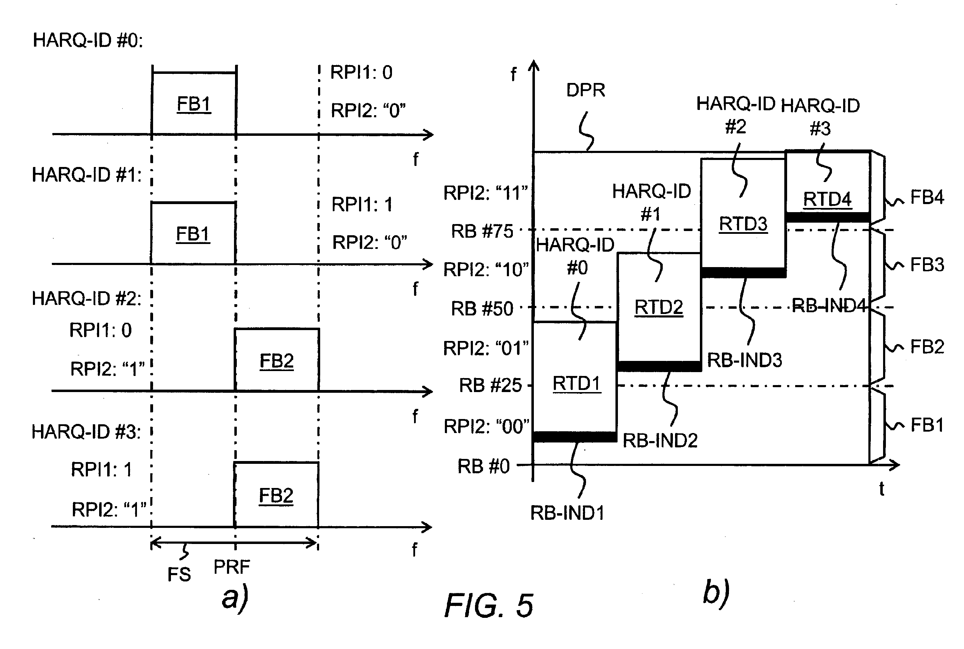

Figure 5 a) shows another possibility for signalling and providing retransmission process indicators from the base station BS to the mobile station MS. The transmission and retransmission method is exemplarily shown for four HARQ processes with decimal HARQ process IDs HARQ-ID #0, #1, #2 and #3. The retransmission process indicator RPI for signalling the HARQ process ID from the base station BS to the mobile station MS is split into the first retransmission process indicator RPI1 and the second retransmission process indicator RPI2. The first retransmission process indicator RPI1 is transmitted via the radio link RL from the base station BS to the mobile station MS, whereas the second retransmission process indicator RPI2 is provided from the base station to the mobile station MS in a following way: A frequency spectrum FS of the radio link RL may be split into a first frequency block FB1 below a predefined radio frequency PRF and a second frequency block FB2 above the predefined radio frequency PRF. The predefined radio frequency PRF may be for example a mean radio frequency of the frequency spectrum FS. For an initial transmission or a retransmission via the first frequency block FB1, the second retransmission process indicator RPI2 may be mapped for example to a "0" bit state and for an initial transmission or a retransmission via the second frequency block FB2, the second retransmission process indicator RPI2 may be mapped for example to a "1" bit state. This means regarding the embodiment of Figure 5 a), that all frequency components of an initial transmission or a retransmission are either located within the first frequency block FB1 or within the second frequency block FB2.

An exemplary mapping between the bit states of the second retransmission process indicator RPI2 and the frequency blocks FB1, FB2 regarding the embodiment of Figure 5 a) is shown in mapping table 5. The bit state of the second retransmission process indicator RPI2 may be the most significant bit of the retransmission process indicator RPI.

Mapping table 5

| HARQ-ID decimal | Frequency block | RPI2 binary | RPI1 binary |
| --- | --- | --- | --- |
| 0 | FB1 | 0 | 0 |
| 1 | FB1 | 0 | 1 |
| 2 | FB2 | 1 | 0 |
| 3 | FB2 | 1 | 1 |

Figure 5 b) shows a further embodiment for signalling and providing retransmission process indicators from the base station BS to the mobile station MS. The transmission and retransmission method is exemplarily shown for eight HARQ processes with decimal HARQ process IDs HARQ-ID #0 to #7 but only four HARQ processes with decimal HARQ process IDs HARQ-ID #0 to #3 are shown for simplification. The retransmission process indicator RPI for signalling the HARQ process ID from the base station BS to the mobile station MS is split into the first retransmission process indicator RPI1 and the second retransmission process indicator RPI2. The first retransmission process indicator RPI1 is transmitted via the radio link RL from the base station BS to the mobile station MS, whereas the second retransmission process indicator RPI2 is provided from the base station to the mobile station MS in a following way: A downlink physical resource DPR such as an 3GPP LTE downlink physical resource of the radio link RL may be split into four frequency blocks FB1, FB2, FB3, FB4. Each frequency block may be split into 25 resource blocks RB (see mapping table 6), for example assuming 20 MHz system bandwidth (100 RBs). Each resource block RB may contain 12 frequency subcarriers with a 15 kHz subcarrier spacing such as applied in 3GPP LTE. Each frequency block is mapped to a two bit state of the second retransmission process indicator RPI2 as shown in the mapping table 6. Resource coverage of radio transmission data RTD1, RTD2, RTD3 and RTD4 for each of the four HARQ process IDs HARQ-ID #0 - #3 is also shown in Figure 5 b). Each of the radio transmission data RTD1, RTD2, RTD3 and RTD4 covers several resource blocks RB of the downlink physical resource DPR. A resource block with smallest frequency subcarriers RB_IND1, RB-IND2, RB-IND3, RB-IND4 covered by the radio transmission data RTD1, RTD2, RTD3 or RTD4 (indicated in Figure 5 b) by a black filled rectangle) may be used for example for indicating the two bit state of the second retransmission process indicator RPI2 to the mobile station MS as the receiver of the radio transmission data RTD1, RTD2, RTD3 and RTD4. This means for example regarding the HARQ process ID HARQ-ID #1 that a two bit state "01" is mapped to the radio transmission data RTD2, because the block with smallest frequency subcarriers RB-IND2 is located in a resource block range between RB #25 and RB #49.

By using the embodiment of Figure 5 b) only a single bit needs to be transmitted from the base station BS to the mobile station MS and two further bits are indicated to the mobile station MS based on a resource coverage of the radio transmission data RTD1, RTD2, RTD3 and RTD4 within the downlink physical resource DPR. The two bit state of the second retransmission process indicator RPI2 may be the two least significant bits of the retransmission process indicator RPI.

Mapping table 6

| HARQ-ID decimal | Resource block | RPI1 binary | RPI2 binary |
|---|---|---|---|
| 0 | #0 - #24 | 0 | 00 |
| 1 | #25 - #49 | 0 | 01 |
| 2 | #50 - #74 | 0 | 10 |
| 3 | #75 - #99 | 0 | 11 |
| 4 | #0 - #24 | 1 | 00 |
| 5 | #25 - #49 | 1 | 01 |
| 6 | #50 - #74 | 1 | 10 |
| 7 | #75 - #99 | 1 | 11 |

Alternatively, a resource block RB_IND with a smallest frequency subcarrier, which is applied for a transmission of the radio transmission data RTD may be mapped to the second retransmission process indicator RPI2 according to the following equation:

$$RPI2 = RB\_IND \bmod s \qquad (3)$$

Example with s=4 states: RB_IND = 0, 4, 8, ... are mapped to RPI2= 0, RB_IND = 1, 5, 9, ... are mapped to RPI2=1, RB_IND = 2, 6, 10, ... are mapped to RPI2=2, and RB_IND = 3, 7, 11, ... are mapped to RPI2=3.

Instead of mapping states of the second retransmission process indicator RPI2 to different TTI sequence numbers or to different frequency blocks or to different resource blocks as described above, the states of the second retransmission process indicator RPI2 may be alternatively mapped to an indexed pool or group of at least two transmit codes such as Hadamard, DFT or Zadoff-Chu spreading codes. In principle all embodiments, which have been described in detail for a mapping between a frequency location and a state of the second retransmission process indicator RPI2 can be also applied for a mapping between an applied transmit code and a state of the second retransmission process indicator RPI2. The pool or group of transmit codes may be partitioned for example into contiguous blocks or into interleaved blocks. In case of two contiguous blocks for example, a first block may be mapped to a first state such as a first bit state "0" of the second retransmission process indicator RPI2 and a second block may be mapped to a second state such as a second bit state "1" of the second retransmission process indicator RPI2. Alternatively, a smallest index of two or more than two applied transmit codes may determine a state of the second retransmission process indicator RPI2 by a corresponding mapping table.

In case of interleaved blocks the second retransmission process indicator RPI2 may be tagged for example to a smallest transmit code index, which is applied for a multi-code resource allocation. In 3GPP HSDPA for example 16 different transmit codes are applied within a radio cell. Such a mapping may be used, if for example in case of 3GPP HSDPA the base station BS transmits user data to the mobile station MS via two spreading codes and a first group of the user data is coded with the first spreading code and a second group of the user data is coded with the second spreading code.

In an even further preferred embodiment, the second retransmission process indicator RPI2 may be split into two or more parts and for each of these parts a mapping may be predefined at the base station BS and at the mobile station MS between two or more states of this part of the second retransmission process indicator RPI2 and two or more ranges of a different radio resource parameter. For example a first mapping of a first part of the second retransmission process indicator RPI2 may be predefined between two states of the first part of the second retransmission process indicator RPI2 and even or odd TTI sequence numbers TTI-SN as described above (see for example embodiment regarding Figure 2 b)). A second mapping of a second part of the second retransmission process indicator RPI2 may be predefined between two states of the second part of the second retransmission process indicator RPI2 and high or low frequency ranges as described above (see for example embodiment regarding Figure 5 a)).

Referring to Figure 6 a further embodiment for signalling and providing the retransmission process indicator RPI from the base station BS to the mobile station MS is shown. The main difference between this embodiment and the preceding embodiments shown in Figures 2 b), 3 a), 3 b), 5 a) and 5 b) is based on the fact, that the implicit indication of the second retransmission process indicator RPI2 is not provided by a radio resource parameter of the transmission of the radio transmission data RTD, RTD1, RTD2, RTD3, RTD4 but provided by a radio resource parameter of the transmission of the first retransmission process indicator RPI1. Figure 6 shows exemplarily four control channels CC1, CC2, CC3, CC4, which are used for transmitting the first retransmission process indicator RPI1 from the base station BS to the mobile station MS. A HARQ process ID HARQ-ID can be identified at the mobile station MS by a transmission of the first retransmission process indicator RPI1 and further by a control channel, which either transmits the first retransmission process indicator RPI1 or which transmits radio resource assignment information for in-band signalling of the first retransmission process indicator RPI1. For the second alternative, the transmitted radio resource assignment information allows the receiving apparatus such as the mobile station MS to know, where to find control information (here the first retransmission process indicator RPI1) within resource blocks for a transmission of the radio transmission data RTD. The transmission and retransmission method is exemplarily shown for four HARQ processes with decimal HARQ process IDs HARQ-ID #0 to #3. An exemplary mapping between the bit states of the second retransmission process indicator RPI2 and the control channels CC1, CC2, CC3, CC4 regarding the embodiment of Figure 6 is shown in mapping table 7. The bit state of the second retransmission process indicator RPI2 may be the least significant bit of the retransmission process indicator RPI.

Mapping table 7

| HARQ-ID decimal | RPI1 binary | RPI2 binary | Control channel |
|---|---|---|---|
| 0 | 0 | 0 | CC1 |
| 1 | 0 | 1 | CC2 |
| 2 | 1 | 0 | CC3 |
| 3 | 1 | 1 | CC4 |

The embodiments described above for a time parameter such as regarding Figure 2 b), for a frequency parameter such as regarding Figure 5 a), for a frequency location of a radio resource block such as regarding Figure 5 b) and for a code parameter by a mapping of bit states of the second retransmission process indicator RPI2 to an indexed pool or group of at least two transmit codes, which all have been described with respect to a transmission of the radio transmission data RTD, RTD1, RTD2, RTD3, RTD4 may be also applied with respect to a transmission of the first retransmission process indicator RPI1 or with respect to a transmission of a radio resource assignment information for in-band signalling of the first retransmission process indicator RPI1.

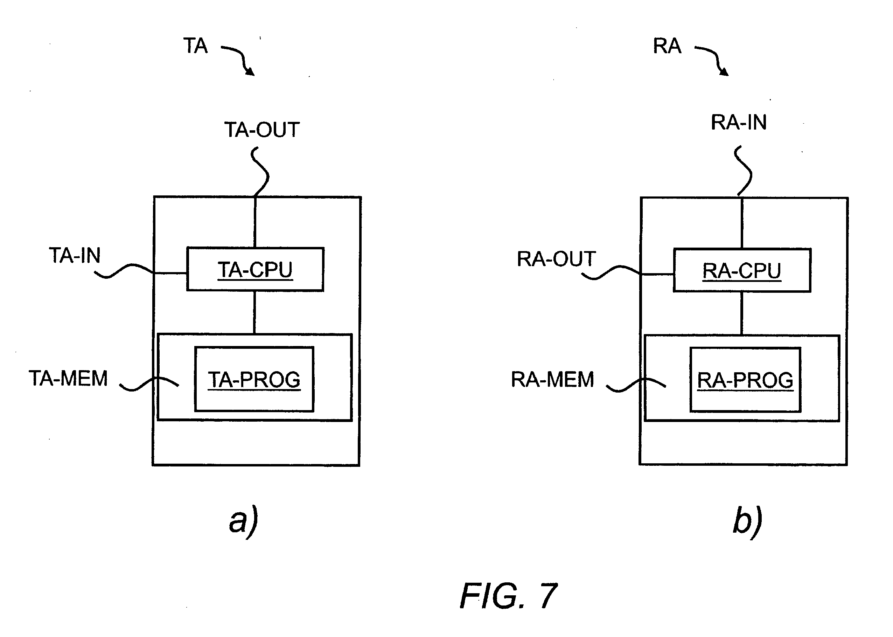

Referring to Figure 7 a) the transmitting apparatus TA may comprise an input port TA-IN for obtaining application data such as video data from an application server, a CPU (CPU = central processing unit) TA-CPU, a computer readable medium TA-MEM, and an output port TA-OUT for providing radio frequency signals to an antenna system. Further conventional components of the transmitting apparatus TA such as power supply, line termination, baseband processing, signal router, modulator and power amplifier are not shown for simplification. The CPU TA-CPU and the computer readable medium TA-MEM may be based for example on a digital baseband board. The CPU TA-CPU is foreseen for executing a computer readable program TA-PROG. The computer readable medium TA-MEM is foreseen for storing the computer readable program TA-PROG. The computer readable program TA-PROG is foreseen for executing steps of the method MET1 belonging to the transmitting apparatus TA. In particular, the computer readable medium TA-MEM may store one or several of the mapping tables as described above. The base station BS, the mobile station MS or the relay station RS may contain the transmitting apparatus TA for example as part of a transceiver.

Referring to Figure 7 b) the receiving apparatus RA may comprise an input port RA-IN for obtaining radio frequency signals from an antenna system, a CPU (CPU = central processing unit) RA-CPU, a computer readable medium RA-MEM, and an output port RA-OUT for providing the recovered application for example to an application such as a video client. Further conventional components of the receiving apparatus RA such as power supply/battery, radio receiver, demodulator, and baseband processing are not shown for simplification. The CPU RA-CPU and the computer readable medium RA-MEM may be based for example on a digital baseband board. The CPU RA-CPU is foreseen for executing a computer readable program RA-PROG. The computer readable medium RA-MEM is foreseen for storing the computer readable program RA-PROG. The computer readable program RA-PROG is foreseen for executing steps of the method MET1 belonging to the receiving apparatus RA. In particular, the computer readable medium RA-MEM may store one or several of the mapping tables as described above and may store the received first retransmission process indicator RPI1, the further first retransmission process indicator RPI1_2, the received further new data indicator NDI_2 and the deduced second retransmission process indicator RPI2. The base station BS, the mobile station MS or the relay station RS may contain the receiving apparatus RA for example as part of a transceiver.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "... unit" or "means for ..." shall be understood as functional blocks comprising circuitry that is adapted for performing a certain function, respectively. Hence, a "means for s.th" may as well be understood as a "means being adapted or suited for s.th.". A means being adapted for performing a certain function does, hence, not imply that such means necessarily is performing said function (at a given time instant).

The functions of the various elements of the transmitting apparatus TA shown in Figure 7 a) and of the receiving apparatus RA shown in Figure 7 b), may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention.

**Claims**

1. A method (MET1) for asynchronous retransmission in a radio communication system (RCS), said method (MET1) comprising the steps of:

   - splitting at a transmitting apparatus (TA) a retransmission process indicator (RPI) into at least a first part (RPI1, RPI1_1) and at least a second part (RPI2),
   - transmitting (M1/3) said at least first part (RPI1, RPI1_1) of said retransmission process indicator (RPI) for an initial transmission or a retransmission of radio transmission data (RTD, RTD1, RTD2, RTD3, RTD4) from said transmitting apparatus (TA) to a receiving apparatus (RA),
   - providing (M1/3, M1/7) said at least second part (RPI2) of said retransmission process indicator (RPI) from said transmitting apparatus (TA) to said receiving apparatus (RA) by a mapping to a radio resource parameter (TTI-SN #0..#9, FB1, FB2, RB #0..#99, CC1..CC4) that is applied for said initial transmission or said retransmission, - deducing (M1/11) at said receiving apparatus (RA) said provided at least second part (RPI2) of said retransmission process indicator (RPI) based on said applied radio resource parameter (TTI-SN #0..#9, FB1, FB2, RB #0..#99, CC1..CC4) and based on said mapping, and
- determining (M1/13) at said receiving apparatus (RA) said retransmission process indicator (RPI) from said received at least first part (RPI1, RPF1_1) and said deduced at least second part (RPI2).

2. Method (MET1) according to claim 1, wherein said method (MET1) further comprises the step of predefining (M1/1, M1/2) at said transmitting apparatus (TA) and at said receiving apparatus (RA) said mapping between a first state of said at least second part (RPI2) of said retransmission process indicator (RPI) and a first range of said radio resource parameter (TTI-SN #0..#9, FB1, FB2, RB #0..#99, CC1..CC4) and between at least a second state of said at least second part (RPI2) of said retransmission process indicator (RPI) and at least a second range of said radio resource parameter (TTI-SN #0..#9, FB1, FB2, RB #0..#99, CC1..CC4), and wherein said determining step (M1/11..M1/M4) comprises the sub-steps of:

- deducing (M1/11) at said receiving apparatus (RA) said at least second part (RPI2) of said retransmission process indicator (RPI) based on said mapping and based on said first range or said at least second range of said received radio resource parameter (TTI-SN #0..#9, FB1, FB2, RB #0..#99, CC1..CC4), and
- determining (M1/13) at said receiving apparatus (RA) said retransmission process indicator (RPI) from said received at least first part (RPI1, RPI1_1) of said retransmission process indicator (RPI) and from said deduced at least second part (RPI2) of said retransmission process indicator (RPI).

3. Method (MET1) according to any of the preceding claims, wherein said radio resource parameter (TTI-SN #0..#9, FB1, FB2, RB #0..#99, CC1..CC4) is a radio resource parameter (TTI-SN #0..#9, FB1, FB2, RB #0..#99) for transmitting said initial transmission or said retransmission or is a radio resource parameter (CC1..CC4) for transmitting said at least first part (RPI1, RPI1_1) of said retransmission process indicator (RPI) or is a radio resource parameter for transmitting an indication for a radio resource (RPI1, RPI1_1) that comprises said at least first part (RPI1, RPI1_1) of said retransmission process indicator (RPI).

4. Method (MET1) according to any of the preceding claims, wherein said radio resource parameter (TTI-SN #0..#9, FB1, FB2, RB #0..#99, CC1..CC4) is a time parameter, a frequency parameter or a coding parameter.

5. Method (MET1) according to claim 4, wherein said time parameter is a time period of at least two transmit time intervals (TTI-SN #0..#9), wherein said at least two transmit time intervals (TTI-SN #0..#9) are numbered serially, wherein even numbered transmit time intervals of said at least two transmit time intervals are allocated to a first one of said at least two states and wherein odd numbered transmit time intervals of said at least two transmit time intervals are allocated to a second one of said at least two states.

6. Method (MET1) according to claims 4, wherein said frequency parameter is a frequency range of at least two transmit frequency sub-ranges (FB1, FB2, RB #0..#99) for transmitting said initial transmission or said retransmission or for transmitting said at least first part of said retransmission process indicator or for transmitting an indication for a radio resource (RPI1, RPI1_1) that comprises said at least first part (RPI1, RPI1_1) of said retransmission process indicator (RPI) and wherein a first one of said at least two transmit frequency sub-ranges (FB1, FB2, RB #0..#99) is allocated to a first one of said at least two states and wherein a second one of said at least two transmit frequency sub-ranges (FB1, FB2, RB #0..#99) is allocated to a second one of said at least two states.

7. Method (MET1) according to claim 4, wherein said coding parameter is a group of at least two transmit codes, wherein a first one of said at least two transmit codes is allocated to a first one of said at least two states and wherein a second one of said at least two transmit codes is allocated to a second one of said at least two states.

8. Method (MET1) according to any of the preceding claims, wherein said method further comprises the steps of:

- transmitting (M1/5) at least a first part (RPI1_2) of at least one further retransmission process indicator for at least one further initial transmission or at least one further retransmission of radio transmission data from said transmitting apparatus (TA) to said receiving apparatus (RA), and
- determining (M1/14) at said receiving apparatus (RA) said at least one further initial transmission or said at least one further retransmission based on said received at least first part (RPI1_2) of said at least one further retransmission process indicator and based on said provided at least second part (RPI2) of said retransmission process indicator (RPI).

9. Method (MET1) according to any of the preceding claims 5 to 7, wherein said initial transmission, a retransmission for said initial transmission and further retransmissions for said initial transmission are allocated to a same state or are allocated alternating to said first one of said at least two states and to said second one of said at least two states.

10. Method (MET1) according to any of the preceding claims 5 to 7, wherein a number of retransmission processes between said transmitting apparatus (TA) and said receiving apparatus (RA) is given as a binary number and wherein said one of said at least two states is interpreted as at least one least significant bit or as at least one most significant bit for determining said retransmission process indicator (RPI).

11. Method (MET1) according to claim 10, wherein said number of retransmission processes is equal to a multiplication of a number of values of said at least first part (RPI1, RPI1_1) of said retransmission process indicator (RPI) by a number of said at least two states.

12. Method (MET1) according to claim 11, wherein said number of retransmission processes is N, said number of said at least two states is s, and a number m of bits for transmitting said at least first part of said retransmission process indicator fulfill equation $N = 2^m \times s$.

13. A transmitting apparatus (TA) for asynchronous retransmission in a radio communication system (RCS), said transmitting apparatus (TA) comprising:

- means for splitting a retransmission process indicator (RPI) into at least a first part (RPI1, RPI1_1) and at least a second part (RPI2),
- means (TA-CPU, TA-PROG, TA-OUT) for transmitting said at least first part (RPI1, RPI1_1) of said retransmission process indicator (RPI) for an initial transmission or a retransmission of radio transmission data (RTD, RTD1, RTD2, RTD3, RTD4), and
- means (TA-CPU, TA-PROG, TA-OUT) for providing said at least second part (RPI2) of said retransmission process indicator (RPI by a mapping to a radio resource parameter (TTI-SN #0..#9, FB1, FB2, RB #0..#99, CC1..CC4) that is applied for said initial transmission or said retransmission.

14. A receiving apparatus (RA) for asynchronous retransmission in a radio communication system (RCS), said receiving apparatus (RA) comprising:

- means (RA-CPU, RA-PROG, RA-IN) for receiving first information for an initial transmission or a retransmission of radio transmission data (RTD, RTD1, RTD2, RTD3, RTD4) from a transmitting apparatus (TA),
- means (RA-CPU, RA-PROG, RA-IN) for obtaining second information by a mapping to a radio resource parameter (TTI-SN #0..#9, FB1, FB2, RB #0..#99, CC1..CC4) that is applied for said initial transmission or said retransmission, and

**characterized in that** said first information is at least a first part (RPI1, RPI1_1) of a retransmission process indicator (RPI), said second information is at least a second part (RPI2) of said retransmission process indicator (RPI) and said receiving apparatus (RA) further comprises

- means for deducing said provided at least second part (RPI2) of said retransmission process indicator (RPI) based on said applied radio resource parameter (TTI-SN #0..#9, FB1, FB2, RB #0..#99, CC1..CC4) and based on said mapping, and means for determining said retransmission process indicator (RPI) from said received at least first part (RPI1, RPI1_1) and said deduced at least second part (RPI2).

**Patentansprüche**

1. Verfahren (MET1) zur asynchronen Übertragungswiederholung in einem Funkkommunikationssystem (RCS), wobei das besagte Verfahren (MET1) die folgenden Schritte umfasst:

- Aufteilen, an einem Sendegerät (TA), eines Übertragungswiederholungsprozess-Indikators (RPI) in mindestens einen ersten Teil (RPI1, RPI1_1) und mindestens einen zweiten Teil (RPI2),
- Übertragen (M1/3) des besagten mindestens ersten Teils (RPI1, RPI1_1) des besagten Übertragungswiederholungsindikators (RPI) für eine erstmalige Übertragung oder eine Übertragungswiederholung von Funkübertragungsdaten (RTD, RTD1, RTD2, RTD3, RTD4) von dem besagten Sendegerät (TA) an das besagte Empfangsgerät (RA),

- Bereitstellen (M1/3, M1/7) des besagten mindestens zweiten Teils (RPI2) des besagten Übertragungswiederholungsprozess-Indikators (RPI) von dem besagten Sendegerät (TA) an das besagte Empfangsgerät (RA) durch Abbilden auf einen Funkressourcenparameter (TTI-SN #0..#9, FB1, FB2, RB #0..#99, CC1..CC4), welcher für die besagte erstmalige Übertragung oder die besagte Übertragungswiederholung angewendet wird,

- Deduzieren (M1/11), an dem besagten Empfangsgerät (RA), des besagten bereitgestellten mindestens zweiten Teils (RPI2) des besagten Übertragungswiederholungsprozess-Indikators (RP1) auf der Basis des besagten angewendeten Funkressourcenparameters (TTI-SN #0..#9, FB1, FB2, RB #0..#99, CC1..CC4) und auf der Basis der besagten Abbildung, und

- Ermitteln (M1/13), an dem besagten Empfangsgerät (RA), des besagten Übertragungswiederholungsprozess-Indikators (RPI) aus dem besagten empfangenen mindestens ersten Teil (RPI1, RPI1_1) und dem besagten deduzierten mindestens zweiten Teil (RPI2).

2. Verfahren (MET1) nach Anspruch 1, wobei das Verfahren (MET1) weiterhin den Schritt des Vordefinierens (M1/1, M1/2), an dem besagten Sendegerät (TA) und an dem besagten Empfangsgerät (RA), der besagten Abbildung zwischen einem ersten Zustand des besagten mindestens zweiten Teils (RPI2) des besagten Übertragungswiederholungsprozess-Indikators (RPI) und einem ersten Bereich des besagten Funkressourcenparameters (TTI-SN #0..#9, FB1, FB2, RB #0..#99, CC1..CC4) und zwischen zumindest einem zweiten Zustand des besagten mindestens zweiten Teils (RPI2) des besagten Übertragungswiederholungsprozess-Indikators (RPI) und mindestens einem zweiten Bereich des besagten Funkressourcenparameters (TTI-SN #0..#9, FB1, FB2, RB #0..#99, CC1..CC4), umfasst, und wobei der besagte Schritt des Ermittelns (M1/11..M1/14) die folgenden Teilschritte umfasst:

- Deduzieren (M1/11), an dem besagten Empfangsgerät (RA), des besagten mindestens zweiten Teils (RPI2) des besagten Übertragungswiederholungsprozess-Indikators (RPI) auf der Basis der besagten Abbildung und auf der Basis des besagten ersten Bereichs oder des besagten mindestens zweiten Bereichs des besagten empfangenen Funkressourcenparameters (TTI-SN #0..#9, FB1, FB2, RB #0..#99, CC1..CC4), und

- Ermitteln (M1/13), an dem besagten Empfangsgerät (RA), des besagten Übertragungswiederholungsprozess-Indikators (RPI) aus dem besagten empfangenen mindestens ersten Teil (RPI1, RPI1_1) des besagten Übertragungswiederholungsprozess-Indikators (RPI) und aus dem besagten deduzierten mindestens zweiten Teil (RPI2) des besagten Übertragungswiederholungsprozess-Indikators (RPI).

3. Verfahren (MET) nach einem beliebigen der vorstehenden Ansprüche, wobei der besagte Funkressourcenparameter (TTI-SN #0..#9, FB1, FB2, RB #0..#99, CC1..CC4) ein Funkressourcenparameter (TTI-SN #0..#9, FB1, FB2, RB #0..#99) für die Übertragung der besagten erstmaligen Übertragung oder der besagten Übertragungswiederholung ist, oder ein Funkressourcenparameter (CC1..CC4) für die Übertragung des besagten mindestens ersten Teils (RPI1, RPI1_1) des besagten Übertragungswiederholungsprozess-Indikators (RPI) ist, oder ein Funkressourcenparameter für die Übertragung einer Angabe für eine Funkressource (RPI1, RPI1_1), welche den besagten mindestens ersten Teil (RPI1, RPI1_1) des besagten Übertragungswiederholungsprozess-Indikators (RPI) umfasst, ist.

4. Verfahren (MET1) nach einem beliebigen der vorstehenden Ansprüche, wobei de besagte Funkressourcenparameter (TTI-SN #0..#9, FB1, FB2, RB #0..#99, CC1..CC4) ein Zeitparameter, ein Frequenzparameter oder ein Codierungsparameter ist.

5. Verfahren (MET1) nach Anspruch 4, wobei der besagte Zeitparameter ein Zeitabschnitt mindestens zweier Sendezeitintervalle (TTI-SN #0..#9) ist, wobei die besagten mindestens zwei Sendezeitintervalle (TTI-SN #0..#9) seriell nummeriert sind, wobei gerade Sendezeitintervalle der besagten mindestens zwei Sendezeitintervalle einem ersten der besagten mindestens zwei Zustände zugeordnet werden, und wobei ungerade Sendezeitintervalle der besagten mindestens zwei Sendezeitintervalle einem zweiten der besagten mindestens zwei Zustände zugeordnet werden.

6. Verfahren (MET1) nach Anspruch 4, wobei der besagte Frequenzparameter ein Frequenzbereich von mindestens zwei Sendefrequenz-Teilbereichen (FB1, FB2, RB #0_#9) für die Übertragung der besagten erstmaligen Übertragung oder der besagten Übertragungswiederholung oder für die Übertragung des besagten mindestens ersten Teils des besagten Übertragungswiederholungsprozess-Indikators oder für die Übertragung einer Angabe für eine Funkressource (RPI1, RPI1_1), welche den besagten mindestens ersten Teil (RPI1, RPI1_1) des besagten Übertragungswiederholungsprozess-Indikators (RPI) umfasst, ist, und wobei ein erster der besagten mindestens zwei Sendefrequenz-Teilbereiche (FB1, FB2, RB #0_#9) einem ersten der besagten mindestens zwei Zustände zugeordnet wird, und wobei ein zweiter der besagten mindestens zwei Sendefrequenz-Teilbereiche (FB1, FB2, RB #0_#9) einem zweiten der besagten mindestens zwei Zustände zugeordnet wird.

7. Verfahren (MET1) nach Anspruch 4, wobei der besagte Codierungsparameter eine Gruppe von mindestens zwei Sendecodes ist, wobei ein erster der besagten mindestens zwei Sendecodes einem ersten der besagten mindestens zwei Zustände zugeordnet wird, und wobei ein zweiter der besagten mindestens zwei Sendecodes einem zweiten der besagten mindestens zwei Zustände zugeordnet wird.

8. Verfahren (MET1) nach einem beliebigen der vorstehenden Ansprüche, wobei das besagte Verfahren weiterhin die folgenden Schritte umfasst:

- Übertragen (M1/5) mindestens eines ersten Teils (RPI1_2) mindestens eines weiteren Übertragungswiederholungsprozess-Indikators für mindestens eine weitere erstmalige Übertragung oder mindestens eine weitere Übertragungswiederholung von Funkübertragungsdaten von dem besagten Sendegerät (TA) an das besagte Empfangsgerät (RA), und
- Ermitteln (M1/14), an dem besagten Empfangsgerät (RA), der besagten mindestens einen weiteren erstmaligen Übertragung oder der besagten mindestens einen weiteren Übertragungswiederholung auf der Basis des besagten empfangenen mindestens ersten Teils (RPI1_2) des besagte mindestens einen weiteren Übertragungswiederholungsprozess-Indikators und auf der Basis des besagten bereitgestellten mindestens zweiten Teils (RPI2) des besagten Übertragungswiederholungsprozess-Indikators (RPI).

9. Verfahren (MET1) nach einem beliebigen der vorstehenden Ansprüche 5 bis 7, wobei die besagte erstmalige Übertragung, eine Übertragungswiederholung für die besagte erstmalige Übertragung und weitere Übertragungswiederholungen für die besagte erstmalige Übertragung dem selben Zustand zugeordnet werden oder abwechselnd dem besagten ersten der besagten mindestens zwei Zustände und dem besagten zweiten der besagten mindestens zwei Zustände zugeordnet werden.

10. Verfahren (MET1) nach einem beliebigen der vorstehenden Ansprüche 5 bis 7, wobei eine Anzahl von Übertragungswiederholungsprozessen zwischen dem besagten Sendegerät (TA) und dem besagten Empfangsgerät (RA) als eine Binärzahl angegeben wird, und wobei der besagte eine der besagten mindestens zwei Zustände als mindestens ein Bit mit der niedrigsten Wertigkeit oder als mindestens ein Bit mit der höchsten Wertigkeit für die Ermittlung des besagten Übertragungswiederholungsprozess-Indikators (RPI) interpretiert wird.

11. Verfahren (MET1) nach Anspruch 10, wobei die besagte Anzahl von Übertragungswiederholungsprozessen gleich einer Multiplikation einer Anzahl von Werten des besagten mindestens ersten Teils (RPI1, RPI1_1) des besagten Übertragungswiederholungsprozess-Indikators (RPI) mit einer Anzahl der besagten mindestens zwei Zustände ist.

12. Verfahren (MET1) nach Anspruch 11, wobei die besagte Anzahl von Übertragungswiederholungsprozessen N ist, wobei die besagte Anzahl der besagten mindestens zwei Zustände s ist, und eine Anzahl m von Bits für die Übertragung des besagten mindestens ersten Teils des besagten Übertragungswiederholungsprozess-Indikators die Gleichung $N = 2^m \times s$ erfüllt.

13. Sendegerät (TA) für die asynchrone Übertragungswiederholung in einem Funkkommunikationssystem (RCS), wobei das besagte Sendegerät (TA) umfasst:

- Mittel zum Aufteilen eines Übertragungswiederholungsprozess-Indikators (RPI) in mindestens einen ersten Teil (RPI1, RPI1_1) und mindestens einen zweiten Teil (RPI2),
- Mittel (TA-CPU, TA-PROG, TA-OUT) zum Übertragen des besagten mindestens ersten Teils (RPI1, RPI1_1) des besagten Übertragungswiederholungsindikators (RPI) für eine erstmalige Übertragung oder eine Übertragungswiederholung von Funkübertragungsdaten (RTD, RTD1, RTD2, RTD3, RTD4), und
- Mittel (TA-CPU, TA-PROG, TA-OUT) zum Bereitstellen des besagten mindestens zweiten Teils (RPI2) des besagten Übertragungswiederholungsprozess-Indikators (RPI) durch Abbilden auf einen Funkressourcenparameter (TTI-SN #0..#9, FB1, FB2, RB #0..#99, CC1..CC4), welcher für die besagte erstmalige Übertragung oder die besagte Übertragungswiederholung angewendet wird.

14. Empfangsgerät (RA) für die asynchrone Übertragungswiederholung in einem Funkkommunikationssystem (RCS), wobei das besagte Empfangsgerät (RA) umfasst:

- Mittel (RA-CPU, RA-PROG, TA-OUT) zum Empfangen von ersten Informationen für eine erstmalige Übertragung oder eine Übertragungswiederholung von Funkübertragungsdaten (RTD, RTD1, RTD2, RTD3, RTD4) von einem Sendegerät (TA),

- Mittel (RA-CPU, RA-PROG, TA-OUT) zum Erhalten von zweiten Informationen durch Abbilden auf einen Funkressourcenparameter (TTI-SN #0..#9, FB1, FB2, RB #0..#99, CC1..CC4), welcher für die besagte erstmalige Übertragung oder die besagte Übertragungswiederholung angewendet wird, und

**dadurch gekennzeichnet, dass** die besagten ersten Informationen mindestens einen ersten Teil (RPI1, RPI1_1) eines Übertragungswiederholungsprozess-Indikators (RPI) darstellen, dass die besagten zweiten Informationen mindestens einen zweiten Teil (RPI2) des besagten Übertragungswiederholungsprozess-Indikators (RPI) darstellen, und dass das besagte Empfangsgerät (RA) weiterhin Mittel zum Deduzieren des besagten bereitgestellten mindestens zweiten Teils (RPI2) des besagten Übertragungswiederholungsprozess-Indikators (RP1) auf der Basis des besagten angewendeten Funkressourcenparameters (TTI-SN #0..#9, FB1, FB2, RB #0..#99, CC1..CC4) und auf der Basis der besagten Abbildung und Mittel zum Ermitteln des besagten Übertragungswiederholungsprozess-Indikators (RPI) aus dem besagten empfangenen mindestens ersten Teil (RPI1, RPI1_1) und dem besagten deduzierten mindestens zweiten Teil (RPI2) umfasst.

## Revendications

1. Procédé (MET1) de retransmission asynchrone dans un système de communication radio (RCS), ledit procédé (MET1) comprenant les étapes suivantes :

   - diviser dans un appareil de transmission (TA) un indicateur de processus de retransmission (RPI) en au moins une première partie (RPI1, RPI1_1) et au moins une deuxième partie (RPI2),
   - transmettre (M1/3) au moins ladite première partie (RPI1, RPI1_1) dudit indicateur de processus de retransmission (RPI) pour une transmission initiale ou une retransmission de données de radiotransmission (RTD, RTD1, RTD2, RTD3, RTD4) à partir dudit appareil de transmission (TA) vers un appareil de réception (RA),
   - fournir (M1/3, M1/7) au moins ladite deuxième partie (RPI2) dudit indicateur de processus de retransmission (RPI) à partir dudit appareil de transmission (TA) vers ledit appareil de réception (RA) par une mise en correspondance avec un paramètre de ressources radio (TTI-SN #0..#9, FB1, FB2, RB #0..#99, CC1..CC4) qui est appliqué pour ladite transmission initiale ou ladite retransmission,
   - déduire (M1/11) dans ledit appareil de réception (RA) au moins ladite deuxième partie fournie (RPI2) dudit indicateur de processus de retransmission (RPI) sur la base dudit paramètre de ressources radio appliqué (TTI-SN #0..#9, FB1, FB2, RB #0..#99, CC1..CC4) et sur la base de ladite mise en correspondance, et
   - déterminer (M1/13) dans ledit appareil de réception (RA) ledit indicateur de processus de retransmission (RPI) à partir au moins de ladite première partie reçue (RPI1, RPI1_1) et au moins de ladite deuxième partie déduite (RPI2).

2. Procédé (MET1) selon la revendication 1, ledit procédé (MET1) comprenant en outre l'étape de prédéfinition (M1/1, M1/2) dans ledit appareil de transmission (TA) et dans ledit appareil de réception (RA) de ladite mise en correspondance entre un premier état au moins de ladite deuxième partie (RPI2) dudit indicateur de processus de retransmission (RPI) et une première plage desdits paramètres de ressources radio (TTI-SN #0..#9, FB1, FB2, RB #0..#99, CC1..CC4) et entre au moins un deuxième état au moins de ladite deuxième partie (RPI2) dudit indicateur de processus de retransmission (RPI) et au moins une deuxième plage desdits paramètres de ressources radio (TTI-SN #0..#9, FB1, FB2, RB #0..#99, CC1..CC4), et dans lequel ladite étape de détermination (M1/11..M1/14) comprend les sous-étapes suivantes :

   - déduire (M1/11) dans ledit appareil de réception (RA) au moins ladite deuxième partie (RPI2) dudit indicateur de processus de retransmission (RPI) sur la base de ladite mise en correspondance et sur la base de ladite première plage ou au moins de ladite deuxième plage desdits paramètres de ressources radio reçus (TTI-SN #0..#9, FB1, FB2, RB #0..#99, CC1..CC4), et
   - déterminer (M1/13) dans ledit appareil de réception (RA) ledit indicateur de processus de retransmission (RPI) à partir au moins de ladite première partie reçue (RPI1, RPI1_1) dudit indicateur de processus de retransmission (RPI) et à partir au moins de ladite deuxième partie déduite (RPI2) dudit indicateur de processus de retransmission (RPI).

3. Procédé (MET1) selon l'une quelconque des revendications précédentes, dans lequel ledit paramètre de ressources radio (TTI-SN #0..#9, FB1, FB2, RB #0..#99, CC1..CC4) est un paramètre de ressources radio (TTI-SN #0,.#9, FB1, FB2, RB #0..#99) pour transmettre ladite transmission initiale ou ladite retransmission ou est un paramètre de ressources radio (CC1..CC4) pour transmettre au moins ladite première partie (RPI1, RPI1_1) dudit indicateur de processus de retransmission (RPI) ou est un paramètre de ressources radio pour transmettre une indication pour une ressource radio (RPI_1, RPI1_1) qui comprend au moins ladite première partie (RPI1, RPI1_1) dudit indicateur de processus de retransmission (RPI).

4. Procédé (MET1) selon l'une quelconque des revendications précédentes, dans lequel ledit paramètre de ressources radio (TTI-SN #0..#9, FB1, FB2, RB #0..#99, CC1..CC4) est un paramètre de temps, un paramètre de fréquence ou un paramètre de codage.

5. Procédé (MET1) selon la revendication 4, dans lequel ledit paramètre de temps est une période d'au moins deux intervalles de temps de transmission (TTI-SN #0..#9), dans lequel lesdits au moins deux intervalles de temps de transmission (TTI-SN #0..#9) sont numérotés en série, dans lequel des intervalles de temps de transmission pairs desdits au moins deux intervalles de temps de transmission sont attribués à un premier état parmi lesdits au moins deux états et dans lequel des intervalles de temps de transmission impairs desdits au moins deux intervalles de temps de transmission sont attribués à un deuxième état parmi lesdits au moins deux états.

6. Procédé (MET1) selon la revendication 4, dans lequel ledit paramètre de fréquence est une plage de fréquences d'au moins deux sous-plages de fréquences de transmission (FB1, FB2, RB #0..#99) pour transmettre ladite transmission initiale ou ladite retransmission ou pour transmettre au moins ladite première partie dudit indicateur de processus de retransmission ou pour transmettre une indication pour une ressource radio (RPI1, RPI1_1) qui comprend au moins ladite première partie (RPI1, RPI1_1) dudit indicateur de processus de retransmission (RPI) et dans lequel une première sous-plage parmi lesdites au moins deux sous-plages de fréquences de transmission (FB1, FB2, RB #0..#99) est attribuée à un premier état parmi lesdits au moins deux états et dans lequel une deuxième sous-plage parmi lesdites au moins deux sous-plages de fréquences de transmission (FB1, FB2, RB #0.,#99) est attribuée à un deuxième état parmi lesdits au moins deux états.

7. Procédé (MET1) selon la revendication 4, dans lequel ledit appareil de codage est un groupe d'au moins deux codes de transmission, dans lequel un premier code de transmission parmi lesdits au moins deux codes de transmission est attribué à un premier état parmi lesdits au moins deux états et dans lequel un deuxième code parmi lesdits au moins deux codes de transmission est attribué à un deuxième état parmi lesdits au moins deux états.

8. Procédé (MET1) selon l'une quelconque des revendications précédentes, ledit procédé comprenant en outre les étapes suivantes :

   - transmettre (M1/5) au moins une première partie (RPI1_2) d'au moins un autre indicateur de processus de retransmission pour au moins une autre transmission initiale ou au moins une autre retransmission de données de radiotransmission à partir dudit appareil de transmission (TA) vers ledit appareil de réception (RA), et
   - déterminer (M1/14) dans ledit appareil de réception (RA) ladite au moins une autre transmission initiale ou ladite au moins une autre retransmission sur la base au moins de ladite première partie reçue (RPI1_2) dudit au moins un autre indicateur de processus de retransmission et sur la base au moins de ladite deuxième partie fournie (RPI2) dudit indicateur de processus de retransmission (RPI).

9. Procédé (MET1) selon l'une quelconque des revendications 5 à 7, dans lequel ladite transmission initiale, une retransmission pour ladite transmission initiale et d'autres retransmissions pour ladite transmission initiale sont attribuées à un même état ou sont attribuées en alternance audit premier état parmi lesdits au moins deux états et audit deuxième état parmi lesdits au moins deux états.

10. Procédé (MET1) selon l'une quelconque des revendications 5 à 7, dans lequel un nombre de processus de retransmission entre ledit appareil de transmission (TA) et ledit appareil de réception (RA) est donné en tant que nombre binaire et dans lequel ledit état parmi lesdits au moins deux états est interprété comme au moins un bit de poids faible ou comme au moins un bit de poids fort pour déterminer ledit indicateur de processus de retransmission (RPI).

11. Procédé (METI) selon la revendication 10, dans lequel ledit nombre de processus de retransmission est égal à une multiplication d'un nombre de valeurs au moins de ladite première partie (RPI1, RPI1_1) dudit indicateur de processus de retransmission (RPI) par un nombre desdits au moins deux états.

12. Procédé (MET1) selon la revendication 11, dans lequel ledit nombre de processus de retransmission est N, ledit nombre desdits au moins deux états est s, et un nombre m de bits pour transmettre au moins ladite première partie dudit indicateur de processus de retransmission complète l'équation $N = 2^m \times s$.

**13.** Appareil de transmission (TA) pour une retransmission asynchrone dans un système de communication radio (RCS), ledit appareil de transmission (TA) comprenant :

- moyens pour diviser un indicateur de processus de retransmission (RPI) en au moins une première partie (RPI1, RPI1_1) et au moins une deuxième partie (RPI2),
- moyens (TA-CPU, TA-PROG, TA-OUT) pour transmettre au moins ladite première partie (RPI1, RPI1_1) dudit indicateur de processus de retransmission (RPI) pour une transmission initiale ou une retransmission de données de radiotransmission (RTD, RTD1, RTD2, RTD3, RTD4), et
- moyens (TA-CPU, TA-PROG, TA-OUT) pour fournir au moins ladite deuxième partie (RPI2) dudit indicateur de processus de retransmission (RPI) par une mise en correspondance avec un paramètre de ressources radio (TTI-SN #0..#9, FB1, FB2, RB #0..#99, CC1..CC4) qui est appliqué pour ladite transmission initiale ou ladite retransmission.

**14.** Appareil de réception (RA) pour une retransmission asynchrone dans un système de communication radio (RCS), ledit appareil de réception (RA) comprenant :

- moyens (RA-CPU, RA-PROD, RA-IN) pour recevoir une première information pour une transmission initiale ou une retransmission de données de radiotransmission (RTD, RTD1, RTD2, RTD3, RTD4) à partir d'un appareil de transmission (TA),
- moyens (RA-CPU, RA-PROG, RA-IN) pour obtenir une deuxième information par une mise en correspondance avec un paramètre de ressources radio (TTI-SN #0..#9, FB1, FB2, RB #0..#99, CC1..CC4) qui est appliqué pour ladite transmission initiale ou ladite retransmission, et

**caractérisé en ce que** ladite première information est au moins une première partie (RPI1, RPI1_1) d'un indicateur de processus de retransmission (RPI), ladite deuxième information est au moins une deuxième partie (RPI2) dudit indicateur de processus de retransmission (RPI) et ledit appareil de réception (RA) comprend en outre des moyens pour déduire au moins ladite deuxième partie fournie (RPI2) dudit indicateur de processus de retransmission (RPI) sur la base dudit paramètre de ressource radio appliqué (TTI-SN #0..#9, FB1, FB2, RB #0..#99, CC1..CC4) et sur la base de ladite mise en correspondance, et des moyens pour déterminer ledit indicateur de processus de retransmission (RPI) à partir au moins de ladite première partie reçue (RPI1, RPI_1_1) et au moins de ladite deuxième partie déduite (RPI2).

FIG. 1

EP 2 654 236 B1

F1        F2

| HARQ-ID | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|
| TTI-SN | 0 | 1 | 2 | 3 | 4 | 5 | 6 | 7 | 8 | 9 | 0 | 1 | 2 | 3 | 4 | 5 |
| RPI | 0 | 1 | 2 | 3 | 4 | 5 | 6 | 7 | 0 | 1 | 2 | 3 | 4 | 5 | 6 | 7 |

*Prior art*

a)

| HARQ-ID | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|
| TTI-SN | 0 | 1 | 2 | 3 | 4 | 5 | 6 | 7 | 8 | 9 | 0 | 1 | 2 | 3 | 4 | 5 |
| RPI1 | 0 | 0 | 1 | 1 | 2 | 2 | 3 | 3 | 0 | 0 | 1 | 1 | 2 | 2 | 3 | 3 |
| RPI2 | 0 | 1 | 0 | 1 | 0 | 1 | 0 | 1 | 0 | 1 | 0 | 1 | 0 | 1 | 0 | 1 |

b)

*FIG. 2*

EP 2 654 236 B1

## a)

| | F1 | | | | | | | | | | | | | | F2 | |
|---|---|---|---|---|---|---|---|---|---|---|---|---|---|---|---|---|
| HARQ-ID | 0 | 1 | 2 | 3 | 4 | 5 | 6 | 7 | 8 | 9 | 0,2 | 1,3 | 10 | 11 | 4,6 | 5,7 |
| TTI-SN | 0 | 1 | 2 | 3 | 4 | 5 | 6 | 7 | 8 | 9 | 0 | 1 | 2 | 3 | 4 | 5 |
| RPI1_1 | 0 | 0 | 1 | 1 | 2 | 2 | 3 | 3 | 4 | 4 | 0 | 0 | 5 | 5 | 2 | 2 |
| RPI1_2 | | | | | | | | | | | 1 | 1 | | | 3 | 3 |
| RPI2 | 0 | 1 | 0 | 1 | 0 | 1 | 0 | 1 | 0 | 1 | 0 | 1 | 0 | 1 | 0 | 1 |

## b)

| HARQ-ID | 0 | 1 | 2 | 3 | 4 | 5 | 6 | 7 | 8 | 9 | 10 | 11 | 0,2, 4,6 | 1,3, 5,7 | 12 | 13 |
|---|---|---|---|---|---|---|---|---|---|---|---|---|---|---|---|---|
| TTI-SN | 0 | 1 | 2 | 3 | 4 | 5 | 6 | 7 | 8 | 9 | 0 | 1 | 2 | 3 | 4 | 5 |
| RPI1_1 | 0 | 0 | 1 | 1 | 2 | 2 | 3 | 3 | 4 | 4 | 5 | 5 | 0 | 0 | 6 | 6 |
| RPI1_2 | | | | | | | | | | | | | 1 | 1 | | |
| RPI1_3 | | | | | | | | | | | | | 2 | 2 | | |
| RPI1_4 | | | | | | | | | | | | | 3 | 3 | | |
| RPI2 | 0 | 1 | 0 | 1 | 0 | 1 | 0 | 1 | 0 | 1 | 0 | 1 | 0 | 1 | 0 | 1 |

FIG. 3

EP 2 654 236 B1

*FIG. 4*

EP 2 654 236 B1

FIG. 5

*FIG. 6*

EP 2 654 236 B1

RA

RA-IN

RA-CPU

RA-OUT

RA-PROG

RA-MEM

b)

TA

TA-OUT

TA-CPU

TA-IN

TA-PROG

TA-MEM

a)

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008104099 A1
- EP 2131518 A2
- EP 2178239 A2
- US 20100061287 A1